# EUROPEAN PATENT SPECIFICATION

(11) **EP 2 034 207 B1**
(45) Date of publication and mention of the grant of the patent: **19.09.2012**
(21) Application number: 08015042.8
(22) Date of filing: 26.08.2008
(51) Int. Cl.: F16D 41/06

(54) **Torque transmitting device for starting engine and one-way clutch used for the device**
Drehmomentübertragungsvorrichtung zum Starten eines Motors und für die Vorrichtung verwendete Einwegkupplung
Dispositif de transmission de couple pour démarrer un moteur et embrayage à roue libre utilisé avec le dispositif

(30) Priority: 28.08.2007 JP 2007220952; 12.09.2007 JP 2007236626; 20.09.2007 JP 2007243354; 31.01.2008 JP 2008020700
(43) Date of publication of application: 11.03.2009
(73) Proprietor: DENSO CORPORATION, Kariya-city, Aichi-pref. 448-8661 (JP)
(72) Inventor: Haruno, Kiyokazu, Kariya-city Aichi-pref., 448-8661 (JP); Murata, Mitsuhiro, Kariya-city Aichi-pref., 448-8661 (JP)
(74) Representative: Kuhnen & Wacker

(56) References cited:
- EP-A1- 0 554 517
- EP-A1- 1 429 052
- EP-A2- 1 300 602
- WO-A1-2004/063062
- DE-A1- 4 421 161
- DE-A1- 10 253 495
- GB-A- 572 611
- GB-A- 2 073 339
- JP-A- 60 263 734
- JP-A- 2000 274 337
- JP-A- 2001 012 512
- US-A- 2 300 223
- US-A1- 2003 034 218
- US-A1- 2005 040 001

## Description

### BACKGROUND OF THE INVENTION

### Field of the Invention

The present invention relates to a torque transmitting device which transmits the starting torque of a starter to a crank shaft of an engine through a roller type one-way clutch to start driving the engine. The present invention also relates to a roller type one-way clutch used for the torque transmitting device.

### Description of Related Art

To start an internal combustion engine mounted in a vehicle, a starter has been used. This starter has a torque transmitting device for transmitting the starting torque of a starter to a crank shaft of the engine through a one-way clutch. A starter having the torque transmitting device is, for example, disclosed in Published Japanese Patent First Publication No. 2000-274337 .

In this starter, a torque transmitting device has a ring gear and a flywheel. The ring gear always meshes with a pinion gear of a starter, and the flywheel is fixedly attached to a crank shaft of an engine. The ring gear is fitted to the flywheel through a bearing such that the ring gear and the flywheel can be rotated freely around the bearing. A one-way clutch is disposed in the ring gear. This clutch has an inner integrally formed with the ring gear, an outer fixed to the flywheel, and an engaging member transmitting a torque of the starter from the inner to the outer and interrupting the torque transmission from the outer to the inner.

When the starting torque of the starter is transmitted from the pinion gear to the inner through the ring gear, the engaging member is locked between the inner and the outer, and the torque is transmitted from the inner to the outer through the engaging member. Therefore, the flywheel receives the torque, and the engine is started in response to the torque. In contrast, when the engine speed is rapidly increased, the rotational speed of the outer exceeds the rotational speed of the inner so as to set the clutch to an over-run state, and the outer reaches a specific rotational speed (called separation rotational speed). At this time, the engaging member is detached from the outer and is centrifugally-separated from the outer circumferential surface of the inner. Therefore, the clutch is raced such that the engaging member interrupts torque transmission from the outer to the inner, so that the clutch prevents the torque of the engine from being transmitted from the flywheel to the ring gear.

In the clutch used for the torque transmitting device, after the engine is ignited, the operation of the starter is stopped, and the rotation of the inner disposed in an internal gear is stopped. In contrast, the outer fixed to the flywheel of the engine is rotated all times. Therefore, to race the clutch during the driving of the engine, it is required to centrifugally separate the engaging member from the outer circumferential surface of the inner. To obtain the centrifugal separation of the engaging member, a sprag type clutch performing the cam operation or a cam type clutch is usually used for the torque transmitting device.

In contrast, a roller type clutch is well known. In this clutch, the outer is shaped so as to have a plurality of cam chambers serially disposed along the circumferential direction of the clutch between the inner circumferential surface of the outer and the outer circumferential surface of the inner. A roller formed in a columnar shape is disposed in each cam chamber. When the rotational speed of the inner is higher than that of the outer, each roller is locked in the cam chamber so as to transmit the starting torque to the engine through the inner, the rollers and the outer. When the rotational speed of the outer exceeds the rotational speed of the inner so as to set the clutch to the over-run state, each roller is rotated with the outer while sliding on the inner. Then, when the rotational speed of the outer is further heightened, the roller is centrifugally separated from the inner at a centrifugal separation time, and the clutch is raced.

During the over-run state of the clutch, each roller is rotated on its own axis. In this case, as compared with the sprag type clutch and the cam type clutch, the friction between the inner and the roller sliding on the inner is reduced. Therefore, the roller type clutch is superior in wear and/or abrasion resistance to the sprag type clutch and the cam type clutch.

A one-way clutch having clutch rollers is, for example, disclosed in Published Japanese Patent First Publication No. 2006-234002. In addition, a one-way clutch, which can ensure large torque capacity with a compact design, includes a roller which is pressurized by each columnar part of the oscillation retainer in an engaging direction with the cam surface is disclosed in Published Japanese Patent First Publication No. 2001-012512.

This clutch has a clutch inner, a clutch outer coaxially disposed with the inner, clutch rollers disposed between the inner and outer, a holding member holding each roller, and springs elastically pushing the respective rollers toward the lock side. The inner forms a cam surface on its outer circumferential surface, and a plurality of ramps is formed on the cam surface. A wedge-shaped space is formed between each ramp and the cylindrical inner surface of the outer, and the rollers are disposed in the respective wedge-shaped spaces. The holding member has a pair of rings and a plurality of bridges. Each bridge is connected with the rings. Each roller is disposed in a pocket (i.e., cam chamber) surrounded by the rings and two adjacent bridges. Each roller is pushed toward the lock side (i.e., width narrowing side) by the corresponding spring fixed to the bridge.

To reduce exhaust gases from vehicles causing global warming, an idling stop system has been recently used. In this system, when a vehicle stops at a street intersection or the like for a certain time, the system automatically stops the engine of the vehicle. Then, when a predetermined condition is satisfied, the engine is automatically restarted. Therefore, as compared with a vehicle having no idling stop system, the number of starting operations is considerably increased in the vehicle having the idling stop system. In this case, the clutch is often set in the over-run state.

A torque transmitting device with the roller type clutch has been recently applied for a vehicle having the idling stop system. In this device, during the period of time from the start of the over-run state to the centrifugal separation time, there is friction between the inner and the rollers sliding on the inner. Because the clutch used for the idling stop system is often set in the over-run state, wear and/or abrasion are often caused in the clutch. Therefore, it is important to reduce the wear and/or abrasion caused in the clutch during the over-run state. To reduce the wear and/or abrasion, it is important to centrifugally separate the rollers from the inner as quickly as possible. That is, it is important to shorten the period of time from the start of the over-run state to the centrifugal separation time.

However, in the torque transmitting device with the roller type clutch, to reliably and rapidly lock the rollers between the inner and the outer in response to the starting torque of the starter, a spring always presses each roller toward the lock side of the cam chamber. Therefore, it takes a long time to unlock the rollers from the inner, so that the period of time from the start of the over-run state to the centrifugal separation time is undesirably increased. That is, the separation rotational speed, at which the rollers pushed by the springs are centrifugally separated from the inner against the resilient force of the springs, is undesirably increased. In this case, wear and abrasion of the rollers and/or the inner are increased, so that the life time of the torque transmitting device is shortened. Especially, the separation rotational speed of the outer is greatly increased when the engine is restarted after misfiring in the engine. Therefore, for example, it is difficult to set the separation rotational speed at a value equal to or lower than a rotational speed of the outer corresponding to the idling speed of the engine. As a result, it is difficult to use the roller type clutch for the torque transmitting device.

Further, in the roller type clutch, because the spring is disposed in a spring chamber between the inner and the outer for each roller, the space used for the cam chambers is narrowed. Further, each spring needs the spring chamber communicating with the cam chamber accommodating the corresponding roller such that the chambers are aligned along the circumferential direction of the clutch. As a result, the number of cam chambers disposed along the circumferential direction is undesirably decreased, so that it is difficult to place a large number of rollers in the clutch. Therefore, the starting torque transmitted through the clutch becomes smaller than those in the sprag type clutch and the cam type clutch. In this case, it is difficult to use the roller type clutch for the torque transmitting device requiring a large starting torque.

### SUMMARY OF THE INVENTION

A main object of the present invention is to provide, with due consideration to the drawbacks of the conventional torque transmitting device, a torque transmitting device for starting an engine wherein wear and/or abrasion caused in a roller type one-way clutch during the over-run state is reduced. The main object is also to provide a roller type one-way clutch wherein wear and/or abrasion caused during the over-run state is reduced.

A subordinate object of the present invention is to provide a torque transmitting device for starting an engine wherein a large starting torque is transmitted through a roller type one-way clutch. The subordinate object is also to provide a roller type one-way clutch through which a large starting torque is transmitted.

According to a first aspect of this invention, the main object is achieved by the provision of a torque transmitting device comprising a first rotating member rotated with a pinion gear of a starter, a second rotating member rotated with a crank shaft of an engine, and a one-way clutch disposed between the first and second rotating members. The clutch comprises an inner rotated with the first rotating member, an outer rotated with the second rotating member and being shaped to form a cam chamber between the inner and the outer such that a width of the cam chamber in a radial direction of the clutch is narrowed toward a first side of the cam chamber in a circumferential direction of the clutch, a rolling member disposed in the cam chamber to be movable in the circumferential direction, and an inertial member. The rolling member connects the inner and the outer in response to a rotation of the inner caused by a starting torque of the starter to transmit the starting torque from the inner to the outer and disconnects the outer from the inner in response to a rotation of the outer caused by an engine torque of the engine to interrupt torque transmission from the outer to the inner. The inertial member is moved with the rolling member in the same direction as a moving direction of the rolling member.

With this structure of the torque transmitting device, the inertial member is moved with the rolling member. In this case, as compared with a conventional torque transmitting device with a one-way clutch having no inertial member, the inertial mass of the combination of the rolling member and inertial member moved in response to a difference in rotational speed between the inner and the outer is larger than that of a roller of the conventional device. Therefore, even when a rotational speed of the outer differs from a rotational speed of the inner, the inertial member induces the rolling member to resist moving with the outer, and the inertial member induces the rolling member to be moved with the inner such that the rolling member is substantially at a standstill on the inner.

When the inner is rotated in response to the starting torque of the starter transmitted through the first rotating member, a difference in rotational speed between the inner and the outer is generated. In this case, the rolling member is moved with the inner toward the first side of the cam chamber and connects the inner and the outer. Therefore, the starting torque is transmitted from the first rotating member to the second rotating member through the inner, the rolling member and the outer in that order, and the cranking in the engine is started.

When the engine is ignited in response to the starting torque of the starter transmitted through the clutch, the outer is rotated with the second rotating member in response to the engine torque of the engine to generate a difference in rotational speed between the inner and the outer. More specifically, the engine speed is increased so as to rapidly heighten the rotational speed of the outer, and the rotational speed of the outer exceeds the rotational speed of the inner rotated in response to the starting torque of the starter. That is, the clutch is transferred to an over-run state. At this time, because the movement of the outer in the circumferential direction is larger than that of the inner, the outer induces the rolling member to be moved with the outer along the circumferential direction.

However, the inertial member prevents, for a short time, the rolling member moved with the inner from being accelerated and moved with the outer. In other words, when the clutch is transferred to the over-run state, the inertial force based on the inertial mass of the combination of the rolling member and inertial member acts on the rolling member such that the rolling member is quickly moved toward a second side of the cam chamber opposite to the first side, and the rolling member becomes movable along the radial direction of the clutch while disconnecting the outer from the inner. Therefore, because the rolling member moved with the inner is also rotated around a rotational axis of the device, the rolling member can be centrifugally separated from the inner in a short time after the clutch is set to the over-run state.

Accordingly, because the inertial force based on the inertial mass of the combination of the rolling member and inertial member induces the rolling member to be quickly moved toward the second side of the cam chamber, the separation rotational speed of the outer, at which the rolling member is centrifugally separated from the inner, can be lowered compared to that in the conventional device. The rolling member can be, for example, centrifugally separated from the inner at a certain rotational speed of the outer which is lower than that corresponding to the idling speed of the engine. As a result, wear and/or abrasion caused in the clutch during the over-run state can be reduced, and the torque transmitting device can have a long life time.

Further, when the engine misfires, it is desired to restart the driving operation of the engine immediately after the misfiring in the engine. At this time, the engine speed is considerably reduced in response to the misfiring, and the rotational speed of the outer is rapidly decelerated. Therefore, the rolling member of the cam chamber moved with the outer before the misfiring receives the inertial force based on the inertial mass of both the rolling member and inertial member after the misfiring so as to be moved toward the first side of the cam chamber.

Therefore, as compared with the conventional device, when the inner is rotated in response to the starting torque of the starter, the rolling member can be rapidly moved toward the first side of the cam chamber and can rapidly transmit the starting torque to the engine. Accordingly, the driving operation of the engine can be restarted in a short time.

According to a second aspect of this invention, the main and subordinate objects are achieved by the provision of a torque transmitting device comprising a first rotating member rotated with a pinion gear of a starter, a second rotating member rotated with a crank shaft of an engine, and a one-way clutch disposed between the first and second rotating members. The clutch comprises an inner rotated with the first rotating member, an outer being rotated with the second rotating member and being shaped to form a plurality of cam chambers aligned along a circumferential direction of the clutch between the inner and the outer such that a width of each cam chamber in a radial direction of the clutch is narrowed toward a first side of the cam chamber in the circumferential direction, a plurality of rollers made of a magnetic material and disposed in the respective cam chambers to be movable in the circumferential direction, and a magnet disposed in the inner along the circumferential direction of the clutch. The rollers connect the inner and the outer in response to a rotation of the inner caused by a starting torque of the starter to transmit the starting torque from the inner to the outer and disconnect the outer from the inner in response to a rotation of the outer caused by an engine torque of the engine to interrupt torque transmission from the outer to the inner.

With this structure of the torque transmitting device, the magnet generates a magnetic force so as to attract the rollers to the inner. When the inner is rotated in response to the starting torque of the starter transmitted through the first rotating member, a difference in rotational speed between the inner and the outer is generated. In this case, the rollers stuck to the inner by the attraction force of the magnet are moved with the inner toward the first side of the cam chamber and connect the inner and the outer. Therefore, the rollers transmit the starting torque from the inner to the outer through the rollers. As a result, the starting torque is transmitted from the first rotating member to the second rotating member through the clutch, and the crank shaft is rotated so as to start the driving operation of the engine.

When the engine is ignited in response to the starting torque of the starter transmitted through the clutch, the outer is rotated with the second rotating means in response to the engine torque of the engine to generate a difference in rotational speed between the inner and the outer. More specifically, the engine speed is increased so as to rapidly heighten the rotational speed of the outer. When the engine speed exceeds the starter speed, the movement of the inner becomes slower than the movement of the outer, so that the rollers stuck to the inner are moved toward a second side of the cam chambers opposite to the first side and disconnect the outer from the inner. In this case, no spring biases the rollers toward the first side of the cam chambers. Then, because the rollers are in the cam chambers moved with the outer, the rotational speed of the rollers is increased with that of the outer. When the rotational speed of the outer reaches a predetermined value, the centrifugal force acting on the rollers rotated around a rotational axis of the clutch becomes larger than the attraction force, so that the rollers are centrifugally separated from the inner. Therefore, the clutch is raced to prevent torque transmission from the engine to the starter.

Accordingly, because the attraction force of the magnet does not bias the rollers toward the first side of the cam chambers, the separation rotational speed in the clutch can be lowered. As a result, wear and/or abrasion caused in the clutch during the over-run state can be reduced, and the torque transmitting device can have a long life time.

Further, the attraction force acting on each roller is weakened as the distance between the magnet and the roller is lengthened. That is, when the roller is slightly separated centrifugally from the inner, the attraction force is rapidly weakened, so that the roller is stably separated centrifugally from the inner. Accordingly, after the clutch is transferred to the over-run state, the roller can be centrifugally separated from the inner at a sufficiently-lowered separation rotational speed, for example, equal to a rotational speed corresponding to the idling speed of the engine. Therefore, the separation rotational speed in the clutch can be considerably lowered as compared with that in the conventional torque transmitting device.

Moreover, because this clutch with the magnet can transmit only the starting torque from the starter to the engine, the clutch needs no springs biasing the rollers toward the first side of the cam chambers. Therefore, because the clutch needs no spring accommodating space, the number of cam chambers can be increased, and the number of rollers canbe increased. Accordingly, a large starting torque of the starter can be transmitted to the engine through the torque transmitting device, so that the engine receiving this starting torque can reliably start the driving operation. In other words, when the starting torque transmitted through the clutch is set to be the same as that through the conventional clutch, the clutch according to this invention can be reduced in size as compared with that of the conventional clutch.

According to a third aspect of this invention, the main object is achieved by the provision of a torque transmitting device comprising a first rotating member rotated with a pinion gear of a starter, a second rotating member rotated with a crank shaft of an engine, and a one-way clutch disposed between the first and second rotating members. The clutch comprises an inner rotated with the first rotating member, an outer being rotated with the second rotating member and being shaped to form a cam chamber between the inner and the outer such that a width of the cam chamber in a radial direction of the clutch is narrowed toward a first side of the chamber in a circumferential direction of the clutch, a rolling member disposed in the cam chamber to be movable along the circumferential direction, and an inertial member. The rolling member connects the inner and the outer in response to a rotation of the inner caused by a starting torque of the starter to transmit the starting torque from the inner to the outer and disconnects the outer from the inner in response to a rotation of the outer caused by an engine torque of the engine to interrupt torque transmission from the outer to the inner. The inertial member is moved with the rolling member in the same direction as a moving direction of the rolling member. The outer has a protrusion disposed on a second side of the cam chamber opposite to the first side such that the protrusion pushes the rolling member in response to a rotational speed of the outer higher than a rotational speed of the inner so as to float the rolling member over the inner.

With this structure of the torque transmitting device, when the rolling member connects the outer and the inner in response to a rotation of the inner caused by a starting torque, the starting torque is transmitted to the second rotating member through the clutch. Therefore, the cranking in the engine is started. When the engine is ignited in response to the starting torque, the rotational speed of the outer is increased with the engine speed, and the rotational speed of the outer exceeds the rotational speed of the inner rotated in response to the starting torque. That is, the clutch is set to the over-run state.

At this time, because the inertial member moved with the rolling member has an inertial mass, the inertial force based on the inertial mass of the inertial member induces the rolling member to resist moving with the outer and to be rotated with the inner, so that the rolling member is rotated with the inner as if the rolling member is substantially at a standstill on the inner. Therefore, the rolling member is quickly moved toward the second side of the cam chamber moved with the outer in response to the over-run state of the clutch to come in contact with or collide with the protrusion disposed on the second side, and the protrusion pushes the rolling member so as to float the rolling member over the inner. That is, the rolling member performs the centrifugal separation from the inner.

As a first example, the protrusion comes in contact with a portion of the rolling member placed nearer to the inner than the center of the rolling member in the radial direction, so that the rolling member is floated over the inner. As a second example, the protrusion of the outer is placed between the inner and the center of the rolling member in the radial direction, so that the rolling member is floated over the inner. As a third example, the protrusion gives a reaction force directed toward the outer to the rolling member.

Accordingly, because the protrusion pushes the rolling member so as to float the rolling member over the inner, the rolling member can quickly perform the centrifugal separation. That is, the separation rotational speed of the outer, at which the rolling member is separated from the inner, can be lowered. As a result, wear and/or abrasion caused in the clutch during the over-run state can be reduced, and the torque transmitting device can have a long life time.

Further, because the inertial force based on the inertial mass of the inertial member moved with the rolling member induces the rolling member to be quickly moved toward the second side of the cam chamber, the rolling member can further quickly perform the centrifugal separation. Accordingly, the separation rotational speed of the outer can be further lowered so as to further reduce the wear and/or abrasion caused in the clutch during the over-run state.

According to a fourth aspect of this invention, the main and subordinate objects are achieved by the provision of a one-way clutch comprisingan inner rotated in response to a first torque, a cylindrical outer being coaxially disposed with the inner on an outer side of the inner to be rotated in response to a second torque and being shaped to form a plurality of cam chambers aligned along a circumferential direction of the clutch between the inner and the outer such that a width of each cam chamber in a radial direction of the clutch is narrowed toward a first side of the circumferential direction, apluralityof rollers disposed in the respective cam chambers to be movable along the circumferential direction, a plurality of elastic members disposed between the inner and the outer, and a force transmitting member. The rollers connect the inner and the outer in response to a rotation of the inner caused by the first torque to transmit the first torque from the inner to the outer and to output the first torque from the outer and disconnect the outer from the inner in response to a rotation of the outer caused by the second torque to prevent the inner from receiving the second torque. Each of the elastic members produces a biasing force directed toward the first side of the circumferential direction. The number of elastic members is smaller than the number of rollers. The force transmitting member receives the biasing forces of the elastic members and pushes the rollers toward the first side of the circumferential direction at the biasing forces of the elastic members.

With this structure of the clutch, when the inner receives the first torque, the inner is rotated, and the rollers are moved toward the first side of the cam chambers while being assisted by the elastic members. Therefore, the rollers are locked between the inner and the outer to connect the outer and the inner, and the first torque is transmitted to the outer through the rolling members. The first torque is finally outputted from the outer. For example, the inner receives a starting torque from a starter through a ring gear fixed to the inner. In response to the starting torque, the cranking in an engine of a vehicle mounting this clutch is started, and the engine is ignited.

Then, when the outer connected with the inner through the rollers receives the second torque, the outer is rotated. When the rotational speed of the outer exceeds the rotational speed of the inner to set the clutch to the over-run state, the rollers are moved toward a second side of the cam chambers opposite to the first side against the biasing forces of the elastic members. Therefore, the rollers unlock the outer from the inner to prevent the inner from receiving the second torque, and the rollers rotated with the inner on a center axis of the clutch are centrifugally separated from the inner. For example, in response to the ignition of the engine, the outer receives an engine torque from the engine as the second torque.

Because the number of elastic members is smaller than the number of rollers, the number of elastic members substantially disposed in the clutch for each roller is low relative to the prior art wherein the elastic member such as a spring is disposed for each roller. Therefore, the mass of rollers substantially receiving the biasing force of one elastic member can be increased without enlarging each roller in size. In other words, the strength of the biasing force received in each roller can be reduced.

Accordingly, because each roller is moved toward the second side of the cam chamber against the reduced biasing force lower than the biasing force of one elastic member, the roller can quickly unlock the outer from the inner, and the separation rotational speed of the outer can be lowered. As a result, wear and/or abrasion caused in the clutch during the over-run state can be reduced, and the clutch can have a long life time.

Further, because the number of elastic members disposed between the inner and the outer is low, the space for the rollers disposed between the inner and the outer can be enlarged. Accordingly, the freedom in arranging the rollers in the clutch can be increased, the number of rollers in the clutch can be increased, and the first torque transmitted from the inner to the outer can be enlarged so as to stably start operating the engine.

### BRIEF DESCRIPTION OF THE DRAWINGS

Fig. 1 is a longitudinal sectional view of the combination of a starter and a torque transmitting device according to first to fourth embodiments ;
Fig. 2 is an enlarged longitudinal sectional view of the upper half portion of the torque transmitting device shown in Fig. 1;
Fig. 3 is an enlarged longitudinal sectional view of a portion of a clutch of the torque transmitting device according to the first embodiment;
Fig. 4 is a perspective side view of a roller and a retainer, separately shown for easy recognition, in the clutch;
Fig. 5 is an enlarged longitudinal sectional view of a portion of the clutch according to the first embodiment to show the operation of the clutch in the over-run state;
Fig. 6 is an enlarged longitudinal sectional view of a portion of the clutch according to the first embodiment to show the operation of the clutch at restart of the engine;
Fig. 7 is an enlarged longitudinal sectional view of a portion of the clutch with the roller and the retainer according to the second embodiment;
Fig. 8A is an expanded view of a portion of a retainer attached to all rollers according to the third embodiment;
Fig. 8B is an enlarged sectional view of a portion of the clutch with the retainer shown in Fig. 8A;
Fig. 9 is a sectional view taken substantially along line A-A of Fig. 8B;
Fig. 10 is an enlarged sectional view of a portion of the clutch with a retainer according to the fourth embodiment, which represents the only embodiment according to the present invention;
Fig. 11 is a sectional view taken substantially along line B-B of Fig. 10;
Fig. 12 is a longitudinal sectional view of the combination of a starter and a torque transmitting device according to the fifth embodiment;
Fig. 13 is a longitudinal sectional view of the upper half portion of the torque transmitting device shown in Fig. 12;
Fig. 14 is an enlarged longitudinal sectional view of a portion of a clutch of the torque transmitting device shown in Fig. 13;
Fig. 15 is a sectional view taken substantially along line C-C of Fig. 14;
Fig. 16 is an enlarged longitudinal sectional view of a portion of the clutch according to the fifth embodiment to show the operation of the clutch in the over-run state;
Fig. 17 is an enlarged longitudinal sectional view of a portion of the clutch according to the fifth embodiment to show the operation of the clutch at restart of the engine;
Fig. 18 is an enlarged longitudinal sectional view of a portion of the clutch according to the sixth embodiment;
Fig. 19 is a longitudinal sectional view of the combination of a starter and a torque transmitting device according to the seventh embodiment;
Fig. 20 is an enlarged longitudinal sectional view of the upper half portion of the torque transmitting device shown in Fig. 19;
Fig. 21 is an enlarged longitudinal sectional view of a portion of a clutch of the torque transmitting device shown in Fig. 20;
Fig. 22A is an enlarged longitudinal sectional view of a portion of a clutch to show a roller moved toward the lock side;
Fig. 22B shows the engine speed rapidly heightened in response to the ignition of an engine;
Fig. 22C is an enlarged longitudinal sectional view of a portion of a clutch to show a roller receiving floating forces in the over-run state;
Fig. 23A is an enlarged longitudinal sectional view of a portion of a clutch to show a roller moved with an outer in the over-run state;
Fig. 23B shows the engine speed rapidly reduced in response to misfiring in an engine and rapidly heightened in response to the restart of the engine;
Fig. 23C is an enlarged longitudinal sectional view of a portion of a clutch to show a roller moved toward the lock side;
Fig. 24 is a longitudinal sectionalviewof anengine starting apparatus having a starter and a torque transmitting device according to the eighth embodiment;
Fig. 25 is an enlarged sectional view of a portion of a clutch of the torque transmitting device shown in Fig. 24;
Fig. 26 is a sectional view taken substantially along line C-C of Fig. 25;
Fig. 27 is a back view of a portion of a retainer of the clutch seen from the rear side of the clutch; and
Fig. 28 is a side view of a portion of the retainer seen from the outer side of the clutch in the radial direction.

### DETAILED DESCRIPTION OF THE PREFERRED EMBODIMENTS

The fourth embodiment of the following embodiments describes the present invention and the other embodiments are employed as a reference example to support the understanding the present invention.

The inventors of this invention have found out, for the first time, the reason why the separation rotational speed in a roller type one-way clutch disposed in a conventional torque transmitting device is high. In the clutch of the conventional device, an inertial mass of each roller disposed in a cam chamber between the inner and an outer is not sufficiently large, so that the roller is easily moved with the outer on the inner in response to the rotational force of the outer. Therefore, when the rotational speed of the outer rotated in response to the engine torque of an engine exceeds the rotational speed of the inner rotated in response to the starting torque of a starter, rollers locked between the inner and outer are easily accelerated and moved with the outer along the rotational direction of the outer. Therefore, the outer first induces the rollers to be moved toward a narrow width side of a cam chamber, so that the clutch continues the lock state. Then, as the rotational speed of the outer is further increased, it becomes difficult to move the rollers with the outer, and the rollers disposed on the inner are moved toward a wide width side of the cam chamber so as to be detached or unlocked from the outer. Then, because the rollers are rotated around the rotational axis of the clutch, the rollers receive the centrifugal force directed toward the outer side in the radial direction of the clutch, and the rollers are centrifugally separated from the outer circumferential surface of the inner.

Therefore, because each roller having the small inertial mass and being locked between the inner and outer easily moves with the outer when the outer is set to the over-run state, the separation rotational speed of the outer, at which the roller is centrifugally separated from the inner, is inevitably increased.

To solve this problem in the roller type clutch, the inventors have noticed, for the first time, that an inertial member moved with a rolling member (representing rollers or each roller of the clutch) in the same direction as the moving direction of the rolling member lowers the separation rotational speed of the outer. More specifically, the inertial mass of the combination of the inertial member and the rolling member disposed between the inner and outer is larger than that of the rolling member. When the rotational speed of the outer exceeds the rotational speed of the inner, the inertial member induces the rolling member moved with the inner to resist being accelerated and moved with the outer. In other words, when the clutch is transferred to the over-run state, the inertial force based on the inertial mass of both the rolling member and inertial member acts on the rolling member accommodated in a cam chamber such that the rolling member is moved toward the wide width side of the cam chamber moved with the outer, and the rolling member becomes movable along the radial direction of the clutch. Therefore, the rolling member rotated around the rotational axis of the device can perform the centrifugal separation from the inner immediately after the clutch is set to the over-run state.

Accordingly, because the inertial force based on the inertial mass of both the rolling member and inertial member induces the rolling member to continue moving with the inner while being moved toward the wide width side of the cam chamber, the separation rotational speed of the outer can be lowered relative to that in the conventional device. For example, the rolling member can perform centrifugal separation from the inner at a certain rotational speed of the outer which is lower than that corresponding to the idling speed of the engine. As a result, wear and/or abrasion caused in the clutch during the over-run state can be reduced, and the torque transmitting device can have a long life time.

Further, when the engine misfires, it is desired to restart the driving operation of the engine immediately after the misfiring in the engine. At this time, the engine speed is considerably reduced in response to the misfiring, and the rotational speed of the outer is rapidly decelerated. Therefore, the rolling member of the cam chamber moved with the outer before the misfiring receives the inertial force based on the inertial mass of both the rolling member and inertial member after the misfiring so as to be moved toward the narrow width side of the cam chamber.

Therefore, as compared with the conventional device, when the inner is rotated in response to the starting torque of the starter, the rolling member can be rapidly moved toward the narrow width side of the cam chamber and can rapidly transmit the starting torque to the engine. Accordingly, the driving operation of the engine can be restarted in a short time.

The embodiments of the present invention and further explaining embodiments will now be described with reference to the accompanying drawings, in which like reference numerals indicate like parts, members or elements throughout the specification unless otherwise indicated.

### EMBODIMENT 1

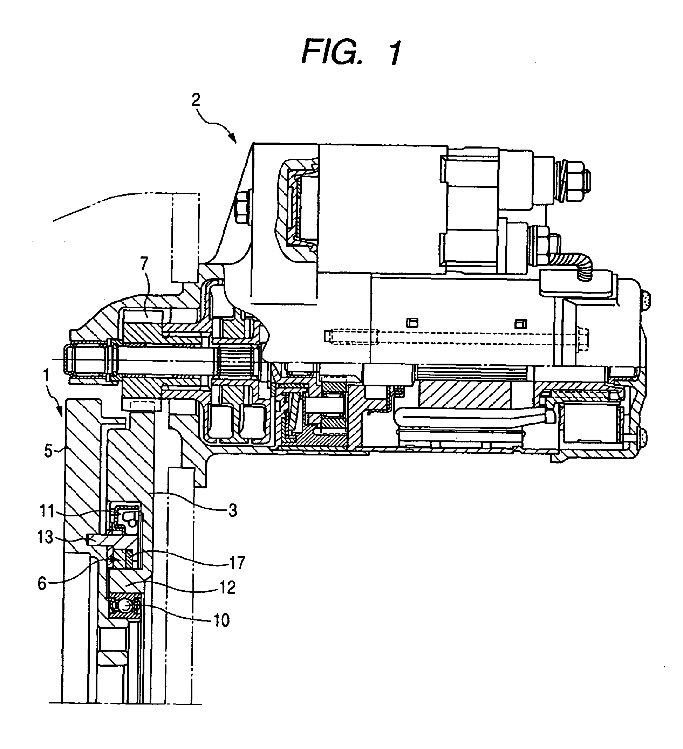

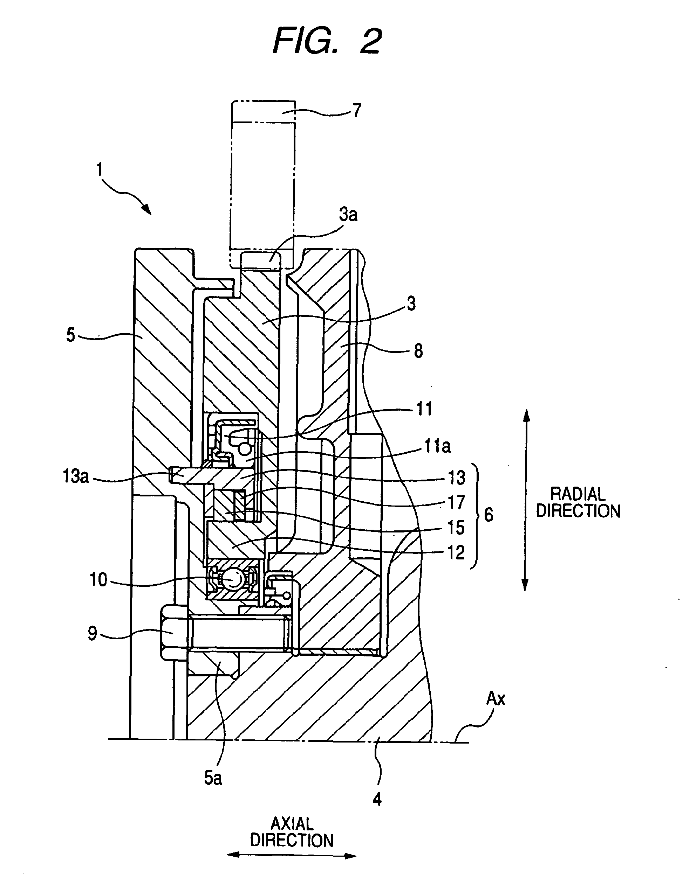

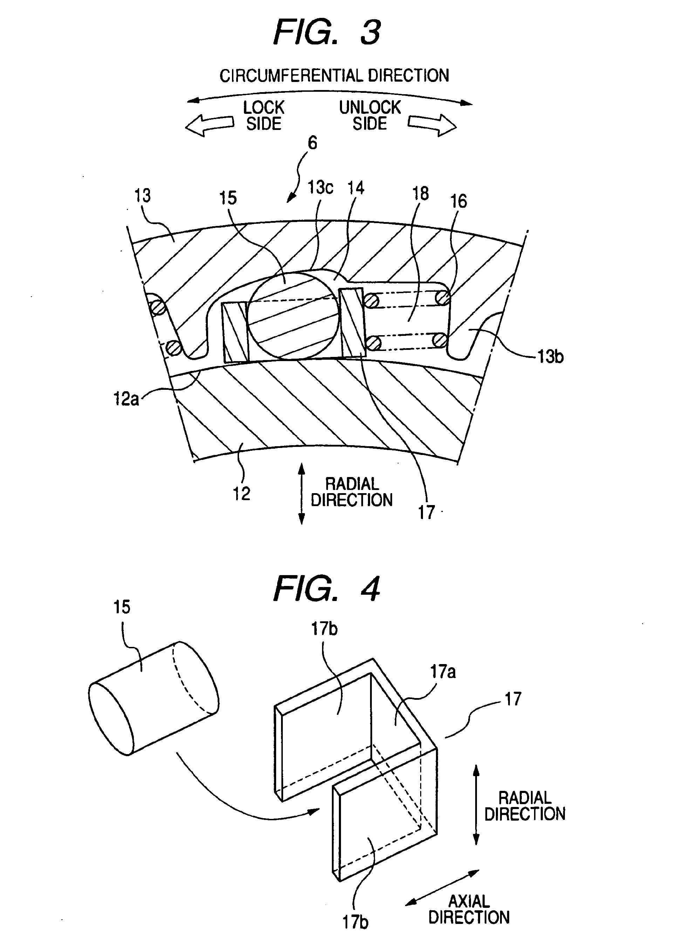

Fig. 1 is a longitudinal sectional view of the combination of a starter and a torque transmitting device according to embodiments of the present invention, and Fig. 2 is an enlarged longitudinal sectional view of the upper half portion of the torque transmitting device. Fig. 3 is an enlarged longitudinal sectional view of a portion of a clutch with a roller and a retainer according to the first embodiment. Fig. 4 is a perspective side view of the roller and the retainer, shown in separation for easy recognition.

As shown in Fig. 1 and Fig. 2, a torque transmitting device 1 for starting the driving operation of an engine has a first rotating member 3 rotated with a pinion gear 7 of a starter 2, a second rotating member 5 fixed to a crank shaft 4 of an engine (not shown) to be rotated with the shaft 4, and a one-way clutch 6 formed approximately in a cylindrical shape and disposed between the rotating members 3 and 4. The clutch 6 transmits the starting torque of the starter 2 from the member 3 to the member 5 when the member 3 is rotated in response to the starting torque of the starter 2 such that the rotational speed of the member 3 is higher than that of the member 5. The clutch 6 prevents torque transmission from the member 5 to the member 3 when the member is rotated in response to the engine torque of the engine such that the rotational speed of the member 5 is higher than that of the ring gear 3.

This device 1 is, for example, applied for an engine system for automatically stopping and restarting the driving operation of the engine. When a vehicle stops on the red signal at a street intersection or stops because of a traffic jam, the system disposed on the vehicle automatically stops driving the engine and automatically restarts the driving operation of the engine in response to a predetermined starting manipulation or operation (e.g., action of the driver detaching his/her foot from a brake pedal) of the driver. This system is generally called an idling stop system or an engine automatic stop and start system (EASS).

The first rotating member 3 is a ring gear formed in a ring shape. The ring gear 3 has a cylindrical hole at its center in its radial direction and teeth 3a successively disposed on the peripheral portion of the gear. The crank shaft 4 is disposed in the hole of the gear 3. The pinion gear 7 of the starter 2 always meshes with the teeth 3a of the gear 3.

The second rotating member 5 is a flywheel of a manual transmission (MT) type vehicle or a drive plate of an automatic transmission (AT) type vehicle. The flywheel 5 has a ring-shaped boss portion 5a at its center in its radial direction. Bolts 9 fix the boss portion 5a to the top portion of the crank shaft 4 protruded from a side wall of an engine block 8.

The members 3 and 5 are disposed to closely face each other along the axial direction of the device 1. A bearing 10 is disposed between the inner circumferential surface of the hole of the member 3 and the outer circumferential surface of the boss portion 5a of the member 5. The members 3 and 5 are attached to each other through the bearing 10 such that the members 3 and 5 are rotated relative to each other on a rotational axis (or center axis) Ax of the device 1. The bearing 10 is formed of a ball bearing with seal.

The member 3 has a concave space on its side surface facing the member 5 along the axial direction. This concave space is partitioned into a clutch space and a seal space disposed on the outer side of the clutch space in the radial direction of the device 1. The clutch 6 is disposed in the clutch space, and a seal member 11 is disposed in the seal space to seal grease packed into the clutch 6. The seal member 11 is fixed to the member 3.

The clutch 6 has a cylindrical-shaped inner 12, an approximately cylindrical-shaped outer 13 coaxially disposed with the inner 12 on the outer side of the inner 12, a plurality of rollers (representing a rolling member) 15 serially disposed along the circumferential direction of the clutch 6 in an open space between the inner 12 and the outer 13 to be movable on the inner 12, and a plurality of retainers 17 (representing an inertial member) disposed between the inner 12 and the outer 13 to be movable with the respective rollers 15 in the same direction as the moving direction of the rollers 15.

The inner 12 is placed on the innermost side of the member 3 in the radial direction of the device 1 and is integrally formed with the member 3 to be rotated with the member 3 along the rotational direction (counter-clockwise direction in Fig. 3). The inner 12 has the inner circumferential surface being in contact with the bearing 10. The outer 13 is forcibly pressed into a concave space of the member 5 and is fixed to the member 5 so as to be rotated with the member 5 along the same rotational direction as that of the inner 12. Each roller 15 is formed in a columnar shape. The rollers 15 are movable along the circumferential direction in response to a difference in rotational speed between the inner 12 and the outer 13.

The clutch 6 may have a plurality of springs 16 disposed between the inner 12 and the outer 13 to directly or indirectly press the respective rollers 15 toward a width narrowing side (i.e., left side in Fig. 3) in the circumferential direction.

The seal member 11 is, for example, a well-known oil seal which is pressed into the seal space so as not to be rotated relative to the member 3. That is, the seal member 11 is rotated with the member 3. The seal member 11 has a lip portion I I a made of rubber. The lip portion 11 a is pressed onto the outer circumferential surface of the outer 13 rotated with the member 5. When the members 3 and 5 are rotated relative to each other, the lip portion 11 a being in contact with the outer 13 slides on the outer circumferential surface of the outer 13 so as to prevent grease from leaking from the clutch 6.

The structure of the clutch 6 is now described in detail with reference to Fig. 3 and Fig. 4.

The outer 13 has a nail 13a extending along the axial direction of the device 1 so as to be pressed into the concave portion of the member 5. The outer circumferential surface of the nail 13a is pressed into and fixed to the inner circumferential surface of the concave portion of the member 5 with a predetermined allowance. The outer circumferential surface of the outer 13 acts as a seal surface of the clutch 6, and this seal surface is slidably in contact with the lip portion 11a of the seal member 11. This seal surface and the outer circumferential surface of the nail 13a form a flat plane.

An open space is formed between the inner 12 and the outer 13 so as to place the rollers 15, the retainers 17 and the springs 16 into the open space. The outer has a plurality of projections 13b aligned along the circumferential direction to form a plurality of cam chambers 14 and a plurality of spring chambers 18 alternately aligned along the circumferential direction in the open space between the inner 12 and outer 13. One cam chamber 14 and one spring chamber 18 communicating with each other in each pair are placed between two projections 13b of the outer 13. In each cam chamber 14, one combination of the roller 15 and retainer 17 is disposed. The inner 12 has the outer circumferential surface facing the chambers 14 and 18. An outer circumferential surface 12a of the inner 12 is formed in a circular shape in section. The inner circumferential surface of the outer 13 has a cam surface 13c facing each cam chamber 14.

Each cam surface 13c of the outer 13 is inclined with respect to the circumferential direction so as to form the corresponding cam chamber 14 in a wedge shape. Therefore, the width of each cam chamber 14 in the radial direction of the clutch 6 is gradually narrowed from the anti-wedge side (hereinafter, called unlock side) facing the spring chamber 18 communicating with the cam chamber 14 to the wedge side (hereinafter, called lock side) in the circumferential direction. The width of the cam chamber 14 on the unlock side is wider than the diameter of the roller 15 so as to unlock the roller 15 on the unlock side, and the width of the cam chamber 14 on the lock side is narrower than the diameter of the roller 15 so as to lock the roller 15 on the lock side. The rotational direction of the inner 12 rotated in response to the starting torque of the starter 2 is set such that the inner 12 is moved from the unlock side to the lock side of each cam chamber 14. The rotational direction of the outer 13 rotated in response to the engine torque of the engine is set to be the same as that of the inner 12.

In each spring chamber 18, one spring 16 fixed to the projection 13b is disposed so as to push the combination of the roller 15 and retainer 17, placed in the cam chamber 14 communicating with the spring chamber 18, toward the lock side.

Therefore, in response to the rotation of the inner 12 at higher speed than that of the outer 13, the rollers 15 disposed on the outer circumferential surface 12a of the inner 12 can be moved with the inner 12 toward the lock side of the cam chambers moved with the outer 13 to be placed and locked between the inner 12 and outer 13. In contrast, in response to the rotation of the outer 13 at higher speed than the rotation of the inner 12, the locked rollers 15 can be moved toward the unlock side of the cam chambers moved with the outer 13, while being substantially at a standstill on the inner 12, and can be unlocked from the outer 13.

As shown in Fig. 4, each retainer 17 is formed in an approximately U-shape in section so as to have a rectangular base wall 17a and two rectangular side walls 17b perpendicularly standing on the respective end portions of the base wall 17a. The roller 15 is placed into the inner space of the retainer 17 such that one axial end surface of the roller 15 faces the base wall 17a while the outer circumferential surface of the roller 15 faces the side walls 17b extending from the base wall 17a along the axial direction of the clutch 6. The distance between side walls 17b is slightly larger than the diameter of the roller 15, so that the roller 15 can be rotated on its own axis within the inner space of the retainer 17. Each combination of the roller 15 and retainer 17 is disposed in one cam chamber 14 such that the side walls 17b of the retainer 17 are placed to be away from each other in the circumferential direction.

Each spring 16 is disposed so as to push the outer surface of one side wall 17b attached to the roller 15, so that the spring 16 indirectly pushes the roller 15 through the retainer 17 toward the lock side of the cam chamber 14. Therefore, when the roller 15 is moved in the cam chamber 14 along the circumferential direction, the retainer 17 attached to the roller 15 can be moved with the roller 15.

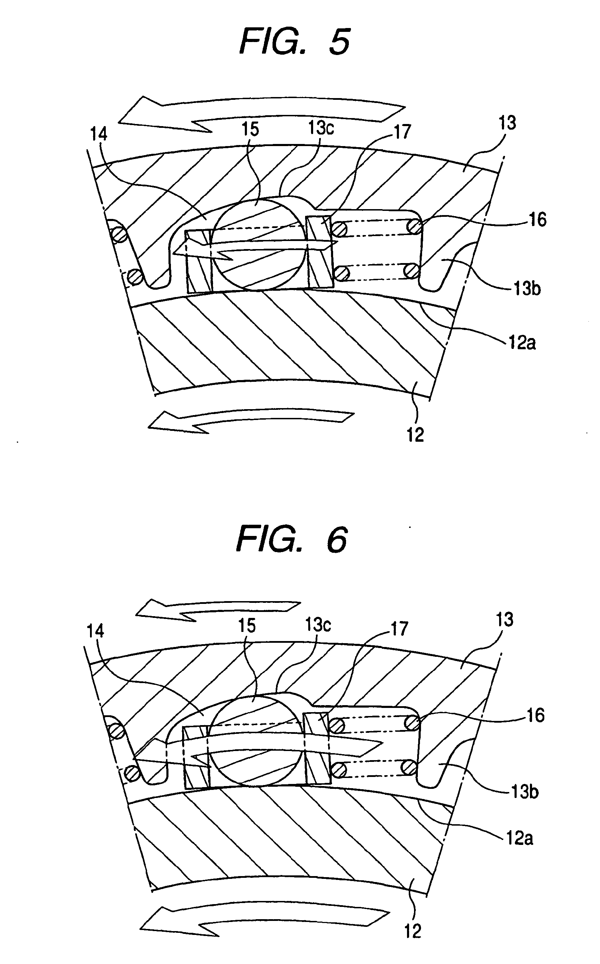

Next, the operation and effects of the torque transmitting device 1 will be described below with reference to Fig. 5 and Fig. 6. Fig. 5 is an enlarged longitudinal sectional view of a portion of the clutch 6 to show the operation of the clutch in the over-run state, while Fig. 6 is an enlarged longitudinal sectional view of a portion of the clutch 6 to show the operation of the clutch at restart of the engine. The rotational speeds of the inner 12, the roller 15 and the outer 13 are, respectively, indicated by arrows in Fig. 5 and Fig. 6.

When the ring gear 3 meshing with the pinion gear 7 of the starter 2 is rotated, the clutch 6 is set in an engaging state to transmit the starting torque from the gear 3 to the flywheel 5 representing the second rotating member, and the crank shaft 4 receiving the starting torque from the flywheel 5 is rotated to start the driving operation of the engine. More specifically, the outer 13 is at a standstill, when the inner 12 integrally formed with the ring gear 3 is rotated on the rotational axis Ax in response to the starting torque of the starter 2, each combination of the roller 15 and the retainer 17 pushed by the spring 16 and disposed on the outer circumferential surface 12a of the inner 12 is moved with the inner 12 so as to be rotated around the rotational axis Ax. Because the movement of the inner 12 in the circumferential direction is larger than that of the outer 13, the roller 15 is moved with the inner 12 toward the lock side of the cam chamber 14 moved with the outer 13. Therefore, the roller 15 is locked between the cam surface 13c of the outer 13 and the outer circumferential surface 12a of the inner 12 to connect the outer 13 and the inner 12, and the outer 13 is rotated with the inner 12. As a result, the torque of the starter 2 is transmitted to the crank shaft 4 through the ring gear 3, the clutch 6 and the flywheel 5 in that order, and the cranking is started.

Then, in response to the rotation of the crank shaft 4, the engine is ignited so as to increase the engine speed. Therefore, as shown in Fig. 5, the rotational speed (indicated by an arrow) of the outer 13 is rapidly increased and exceeds the rotational speed (indicated by another arrow) of the inner 12. That is, the clutch 6 is transferred to an over-run state. In response to the clutch 6 set to the over-run state, the inertial force based on the inertial mass of each combination of the roller 15 and retainer 17 induces the roller 15 disposed on the inner 12 to continue moving with the inner 12 as if the roller 15 is at a standstill on the outer circumferential surface 12a of the rotated inner 12. That is, the inertial force induces the roller 15 to resist moving with the outer 13. Therefore, the moment the clutch 6 is transferred to the over-run state, the inertial force induces the roller 15 moved with the inner 12 to be moved, against the pushing force of the spring 16, toward the unlock side of the cam chamber 14 moved with the outer 13.

Thereafter, as the rotational speed of the outer 13 is further increased, the roller 15 is gradually moved toward the unlock side to be unlocked from the outer 13. That is, the roller 15 disconnects the outer 13 from the inner 12. Because the roller 15 is rotated around the rotational axis Ax, the roller 15 receives the centrifugal force directed toward the outer side of the clutch 6. Therefore, the moment the roller 15 is unlocked, the roller 15 is centrifugally separated from the outer circumferential surface 12a of the inner 12 at a specific rotational speed (i.e., separation rotational speed) of the outer 13, so that the clutch 6 is raced. In this case, because the clutch 6 prevents torque transmission from the flywheel 5 to the ring gear 3, no engine torque of the engine is transmitted to the starter 2.

In the clutch 6 according to this embodiment, the inertial mass of the combination of the roller 15 and retainer 17 is larger than the inertial mass of the roller 15, so that the inertial force based on the inertial mass of the combination of the roller 15 and retainer 17 is larger than that based on the inertial mass of the roller 15. Therefore, as compared with a conventional clutch having no inertial member, the separation rotational speed in the clutch 6, at which the roller 15 is centrifugally separated from the inner 12, is lower than that in the conventional clutch.

Accordingly, the separation rotational speed can be lowered. For example, the separation rotational speed can be set to be equal to or lower than a rotational speed of the outer 13 corresponding to the idling speed of the engine. Further, assuming that the roller 15 rotated with the outer 13 at a high speed slides on the inner 12 in the over-run state before the centrifugal separation, there is friction between the roller 15 and the inner 12, so that the roller 15 and the inner 12 are considerably worn. However, because the separation rotational speed of the outer 13 is lowered, the wear of the roller 15 and the inner 12 can be considerably reduced, and the life time of the clutch 6 can be considerably increased.

Further, when the engine misfires, it is desired to restart the driving operation of the engine immediately after the misfiring in the engine. At this time, the engine speed is considerably reduced in response to the misfiring, and the rotational speed of the outer 13 is rapidly decelerated. Therefore, the rollers 15 of the cam chambers 14 moved with the outer 13 before the misfiring receives the inertial force based on the inertial mass of each combination of the roller 15 and retainer 17 after the misfiring so as to be moved toward the lock side of the cam chamber 14. That is, the inertial force induces the roller 15 to be moved in the same direction as the pushing direction of the spring 16. Therefore, as shown in Fig. 6, when the rotational speed (indicated by an arrow in Fig. 6) of the inner 12 rotated in response to the torque of the starter 2 exceeds the rotational speed (indicated by an arrow in Fig. 6) of the outer 14, the roller 15 is rapidly moved toward the lock side of the cam chamber moved with the outer 13, and the roller 15 is locked between the inner 12 and the outer 13.

Because the inertial force is larger than that in the conventional clutch, the roller 15 can be moved toward the lock side at a higher speed than that in the conventional clutch. Accordingly, the roller 15 can be rapidly locked between the inner 12 and the outer 13, and the driving operation of the engine can be restarted in a short time.

In this embodiment, the retainer 17 is disposed such that the spring 16 indirectly pushes the roller 15 through the retainer 17. However, the retainer 17 may be disposed such that the spring 16 directly pushes the roller 15 on condition that the retainer 17 is moved with the roller 15 in the same moving direction as that of the roller 15. For example, both end circular surfaces of the roller 15 are attached to the respective side walls 17b of the retainer 17, and the spring 16 directly pushes the outer circumferential surface of the roller 15 attached to the retainer 17.

Further, in this embodiment, the spring 16 is disposed in the clutch 6 so as to push the corresponding roller 15 toward the lock side. However, no spring may be disposed in the clutch 6. In this case, each roller 16 disposed on the inner 12 is moved with the inner 12 in the cam chamber 14 to be locked or unlocked.

### EMBODIMENT 2

When each roller 15 is centrifugally separated from the outer circumferential surface 12a of the inner 12, an open space is formed on each of inner and outer sides of the roller 15 in the radial direction. Therefore, it is a probably that the roller 15 is fluttered or fluctuated along the radial direction during the rotation of the roller 15 around the rotational axis Ax. In this case, the roller 15 repeatedly collides or comes in contact with the inner 12. As a result, portions of the roller 15 are worn so as to deform the roller 15. In this embodiment, the retainer 17 is modified to prevent the roller 15 from being fluttered or fluctuated along the radial direction.

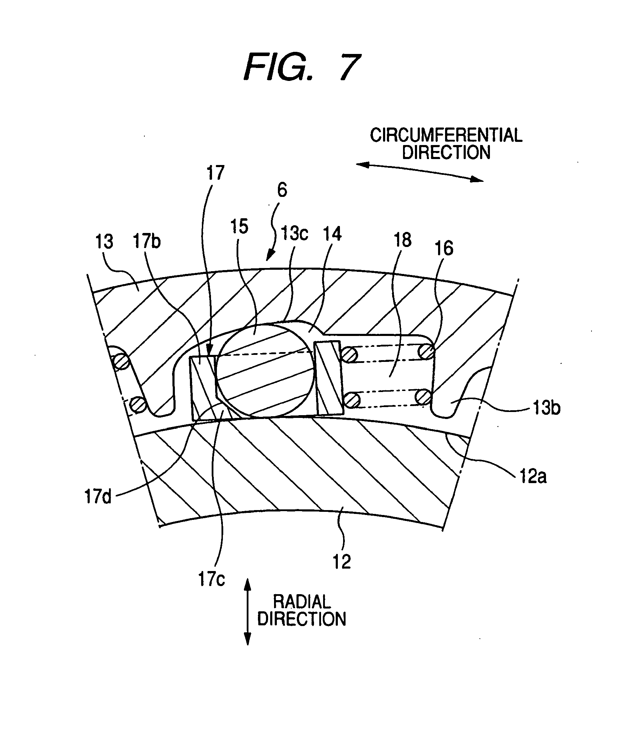

Fig. 7 is an enlarged longitudinal sectional view of a portion of the clutch 6 with the roller 15 and the retainer 17 according to the second embodiment.

As shown in Fig. 7, the side wall 17b of each retainer 17 disposed on the lock side of the cam chamber 14 has a guide portion 17c extending toward a space between the outer circumferential surface of the roller 15 and the outer circumferential surface 12a of the inner 12. The guide portion 17c is formed in a triangular shape in section so as to have a guide surface 17d facing the roller 15. The surface 17d is inclined with respect to the circumferential direction such that the guide portion 17c guides the roller 15 disposed on the surface 17d to be floated over the outer circumferential surface 12a of the inner 12 during the centrifugal separation.

With this structure of the retainer 17, when the roller 15 is centrifugally separated from the outer circumferential surface 12a of the inner 12, the guide portion 17c guides the roller 15 disposed on the surface 17d to be floated over the outer circumferential surface 12a of the inner 12. Further, when the roller 15 intends to come in contact with the outer circumferential surface 12a of the inner 12, the guide portion 17c induces the roller 15 disposed on the surface 17d to be away from the outer circumferential surface 12a of the inner 12. Therefore, the guide portion 17c of the retainer 17 suppresses the fluttering of the roller 15.

Accordingly, the rollers 15 guided by the retainers 17 can be stably rotated around the rotational axis Ax during the centrifugal separation, so that the guide portions 17c of the retainers 17 can suppress wear or abrasion of the rollers 15. That is, the deformation of the rollers 15 can be prevented, and the life time of the clutch 6 can be considerably increased.

Further, because the clutch 6 can reliably prevent the torque transmission during the centrifugal separation, the clutch 6 can be operated with higher performance.

In this embodiment, the guide portion 17c of each retainer 17 is disposed on the lock side of the cam chamber 14. However, the guide portion 17c may be disposed on the unlock side of the cam chamber 14. Further, the base wall 17a of each retainer 17 may have a guide portion.

### EMBODIMENT 3

In the first and second embodiments, the retainer 17 is disposed for each roller 15. However, a retainer may be disposed for all rollers 15 of the clutch 6.

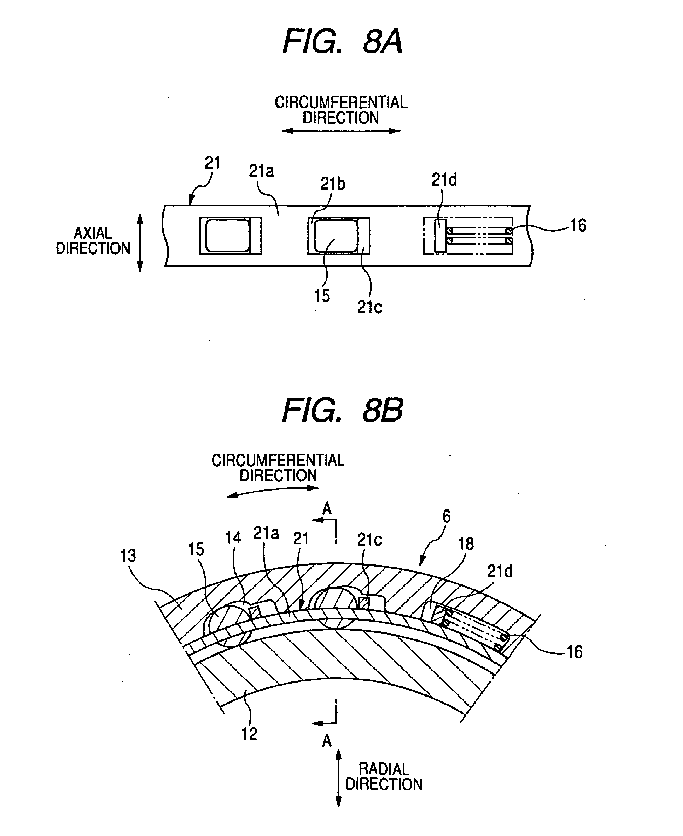

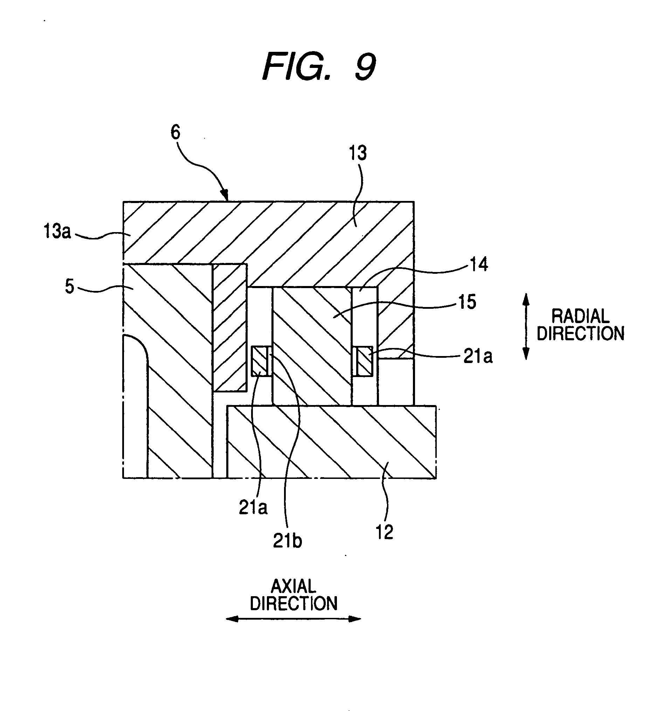

Fig. 8A is an expanded view of a portion of a retainer attached to all rollers 15 according to the third embodiment. The retainer shown in Fig. 8A is seen from the outer side in the radial direction. Fig. 8B is an enlarged sectional view of a portion of the clutch 6 with the retainer shown in Fig. 8A, while Fig. 9 is a sectional view taken substantially along line A-A of Fig. 8B.

As shown in Fig. 8A, Fig. 8B and Fig. 9, the clutch 6 has a retainer 21 (i.e., inertial member) which is moved with the rollers 15 in the same direction as the moving direction of the rollers 15 when the rollers 15 disposed on the inner 12 are moved along the circumferential direction in response to the difference in rotational speed between the inner 12 and the outer 13.

The outer 13 has projections 13b to form the cam chambers 14 and the spring chambers 18 separately disposed from one another. The springs 16 are disposed in the respective spring chambers 18. The rollers 15 are disposed in the respective cam chambers 14.

The retainer 21 has a retainer body (representing an inertial body) 21 a formed in a cylindrical shape so as to successively extend along the circumferential direction in the open space between the inner 12 and the outer 13, a plurality of roller accommodating openings 21 b with respective roller pushing walls (representing roller pushing parts) 21c, and a plurality of spring receiving walls (representing force receiving parts) 21d. The openings 21b are placed at positions of the respective cam chambers 14. The walls 21 d are placed at positions of the respective spring chambers 18. Therefore, the openings 21 b and walls 21d are separately arranged along the circumferential direction.

Each wall 21d of the retainer 21 receives the pushing force of one spring 16 disposed in the spring chamber 18. The walls 21d are disposed approximately at equal intervals. Each wall 21 d is formed by cutting a rectangular portion of the retainer 21 and bending the cut portion perpendicularly to the surface of the retainer 21.

Each opening 21 b of the retainer 21 is formed in a rectangular shape so as to accommodate one roller 15, so that the number of openings 21b equals the number of rollers 15. Each wall 21c is disposed on the unlock side of the roller 15 accommodated in the corresponding opening 21b, and the pushing force of the springs 16 received on the walls 21d is transmitted to each roller 15 through the wall 21c such that the roller 15 is pushed toward the lock side of the cam chamber 14. Each wall 21c is formed in the same manner as the wall 21d by press work.

With this structure of the clutch 6, when the rotational speed of the outer 13 is rapidly increased in response to the ignition of the engine so as to transfer the clutch 6 to the over-run state, the inertial force based on the inertial mass of the combination of the rollers 15 and retainer 21 induces the rollers 15 locked between the inner 12 and the outer 13 to resist moving with the outer 13, but the inertial force induces the rollers 15 to be at a standstill on the inner 12. That is, the inertial force induces the rollers 15 to be moved toward the unlock side of the cam chambers 14.

Accordingly, as compared with the conventional clutch having no retainer, the rollers 15 rapidly moved toward the unlock side are centrifugally separated from the inner 12 at a lowered separation rotational speed of the outer 13 equal to or smaller than a rotational speed corresponding to the idling speed of the engine.

Further, when the engine misfires, it is desired to restart the driving operation of the engine immediately after the misfiring in the engine. At this time, the engine speed is considerably reduced in response to the misfiring, and the rotational speed of the outer 13 is rapidly decelerated. Therefore, the rollers 15 of the cam chambers 14 moved with the outer 13 before the misfiring receives the inertial force based on the inertial mass of each combination of the roller 15 and retainer 17 after the misfiring so as to be moved toward the lock side of the cam chamber 14.

Therefore, as compared with the conventional clutch having no retainer, when the driving operation of the engine is restarted, the clutch 6 can be rapidly set to the engaging state to transmit the torque of the starter 2 to the crank shaft 4 through the clutch 6. Accordingly, the driving operation of the engine can be restarted in a short time.

Further, because the openings 21b and the walls 21 c and 21 d of the retainer 21 are formed by press work, the retainer 21 can be easily manufactured at low cost.

In this embodiment, because the number of rollers 15 equals the number of springs 16, the number of openings 21b is set to equal the number of walls 21d. However, the number of rollers 15 may be set to be larger than the number of springs 16. In this case, the number of openings 21b is set to be larger than the number of walls 21d. With this structure of the clutch 6, the torque of the starter 2 transmitted to the crank shaft 4 through the clutch 6 can be increased.

Further, in this embodiment, the retainer 21 may further have a wall on the lock side of each roller 15 to place the roller 15 between this wall and the wall 21c. With this structure, the rollers 15 can more stably be moved with the retainer 21 when the locked rollers 15 are unlocked.

### EMBODIMENT 4

To stably move the rollers 15 with the inner 12, it is preferred that a retainer have a large sliding resistance to the inner 12. Further, lubricant such as grease is packed into the cam chambers 14 such that the rollers 15 are smoothly moved on the outer circumferential surface 12a of the inner 12. In this embodiment, a retainer moved with the rollers 15 in the same direction as the moving direction of the rollers 15 is configured to have a large sliding resistance to the inner 12 while preventing lubricant from leaking from the cam chambers 14.

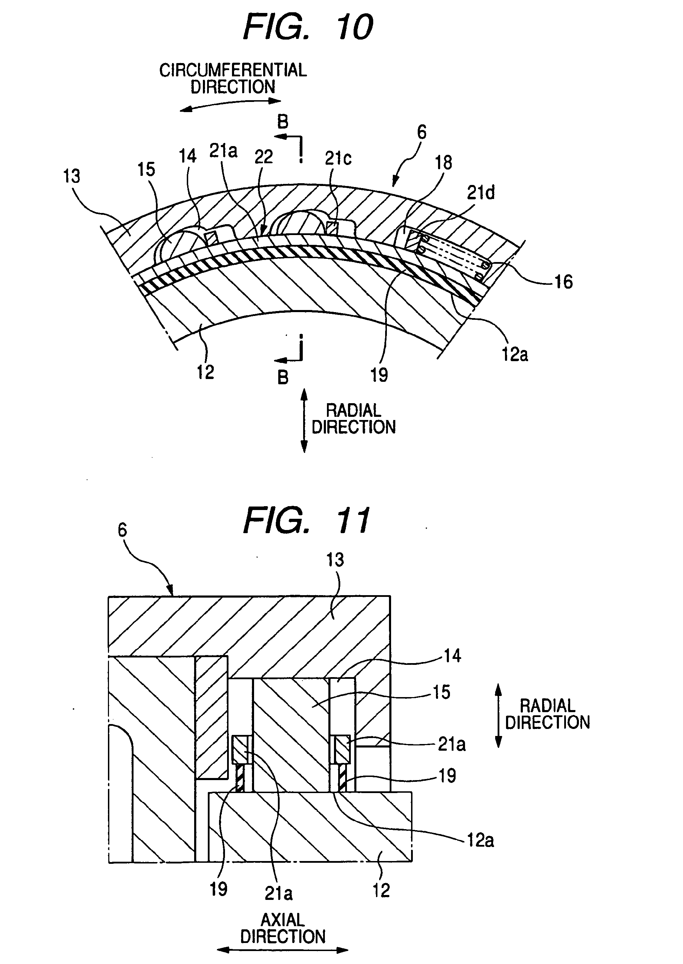

Fig. 10 is an enlarged sectional view of a portion of the clutch 6 with a retainer according to the fourth embodiment, while Fig. 11 is a sectional view taken substantially along line B-B of Fig. 10.

As shown in Fig. 10 and Fig. 11, a retainer 22 according to the fourth embodiment differs from the retainer 21 shown in Fig. 8A in that the retainer 22 additionally has an attaching part such as a pair of rubber rings 19 attached to the inner circumferential surface of the retainer body 21 a along the whole circumferential direction so as to be slidably placed on the outer circumferential surface 12a of the inner 12. The rubber rings 19 are disposed on the respective outer sides of the roller 15 in the axial direction of the clutch 6 so as to seal grease packed between the rollers 15 and the inner 12. The rubber rings 19 are, for example, fitted to the retainer body 21a by baking.

With this structure of the clutch 6, the rubber rings 19 seal grease coated on the outer circumferential surface 12a of the inner 12 so as to prevent the grease from leaking from the clutch 6. Therefore, the rubber rings 19 are used as a sealing member. Accordingly, lubricity between the rollers 15 and the inner 12 can be preferably maintained, so that the wear and abrasion caused in the rollers 15 can be reduced so as to increase the life time of the device 6.

Further, because the rubber rings 19 are slidably placed on the outer circumferential surface 12a of the inner 12, large sliding friction is generated between the rubber rings 19 and the inner 12 when the retainer 22 is moved on the inner 12. When the outer 13 starts being rotated at high speed in response to the ignition of the engine, this sliding friction induces the rollers 15 and the retainer 22 to resist moving with the outer 13. That is, even when the rollers 15 receives the moving force from the outer 13 rotated at higher speed than that of the inner 12 so as to move with the outer 13 along the circumferential direction, the sliding friction induces the retainer 22 moved with the rollers 15 to be moved with the inner 12. Therefore, the rollers can be rapidly detached or unlocked from the outer 13 so as to be centrifugally separated from the inner 12. Accordingly, the separation rotational speed in the clutch 6 can be further lowered, so that the freedom in design of the clutch 6 can be heightened.

In this embodiment, the attaching part is attached to the retainer body 21 a along the whole circumferential direction so as to have both the sealing performance and the separation rotational speed lowering performance. However, the attachingpart maybe attached to the retainer body 21 a so as to be in contact with a part of the outer circumferential surface 12a of the inner 12 in the circumferential direction. In this case, the retainer has only the separation rotational speed lowering performance.

Further, in this embodiment, the attaching part is made of rubber to have a large sliding resistance. However, the attaching part may be made of any material on condition that the attaching part seals the grease or the sliding friction between the attaching part and the inner 12 is generated.

Moreover, in this embodiment, the attaching part is attached to the retainer body 21a extending in a ring shape along the whole circumferential direction. However, each retainer 17 shown in Fig. 4 may have an attaching part attached to the inner circumferential surface of the inner 12.

### EMBODIMENT 5

In a conventional roller type clutch having no inertial member, springs always push respective rollers toward the lock of the cam chambers. When the outer is transferred to the over-run state in response to the ignition of the engine, each roller is moved toward the unlock side of the cam chamber, and the biasing force of the spring pushing the roller toward the lock side of the cam chamber is increased with the movement of the roller. That is, because the roller is moved so as to compress the spring, the biasing force accumulated in the spring is increased with the movement of the roller. In this case, to centrifugally separate the roller from the inner, it is required to move the roller toward the unlock side against the biasing force of the spring. Therefore, it is difficult to lower the separation rotational speed in the conventional clutch.

The inventors of this specification have noticed for the first time that, even in a case where the clutch has no spring(s), the clutch having a magnet attracting the rollers to the inner can reliably transmit the starting torque of the starter from the inner to the outer, when the inner is rotated in response to the starting torque, and can reliably prevent torque transmission from the outer to the inner at a low separation rotational speed when the outer is rotated in response to the engine torque of the engine.

In this embodiment, a clutch has no spring but has a magnet to lower the separation rotational speed in the clutch. In addition, because the clutch has no spring, the number of rollers can be increased, so that a large starting torque of the starter 2 can be transmitted through the clutch.

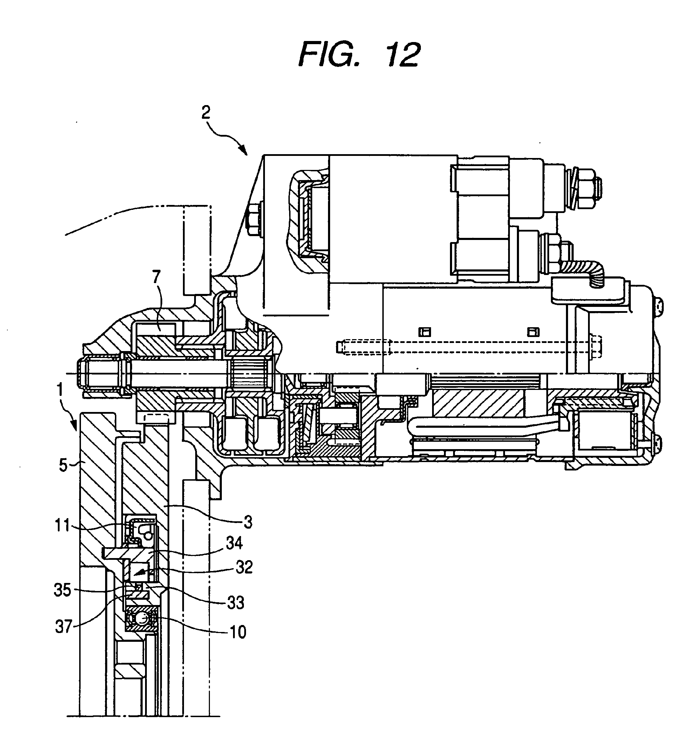

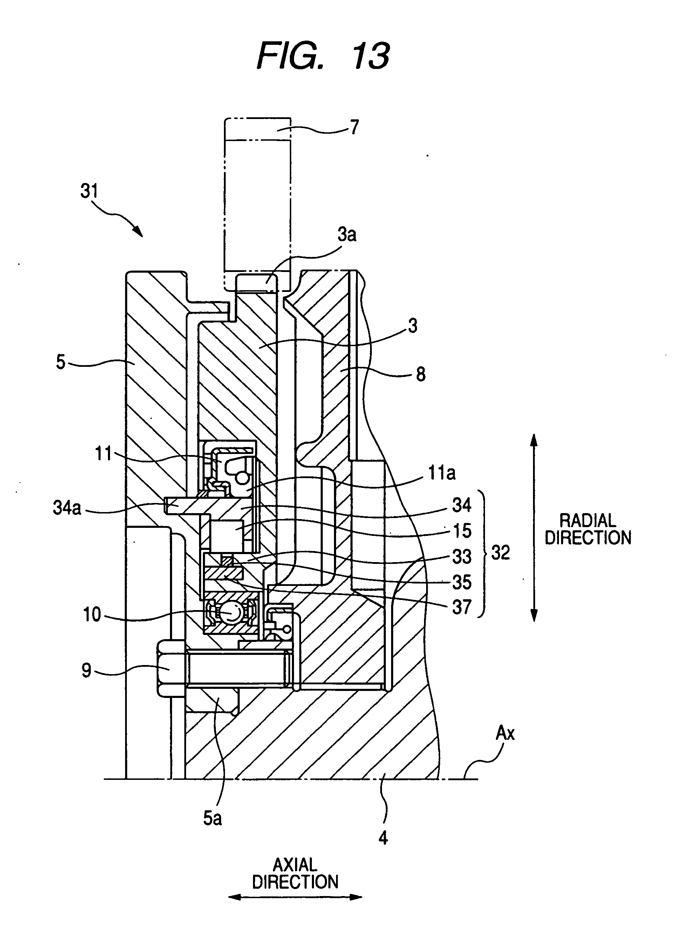

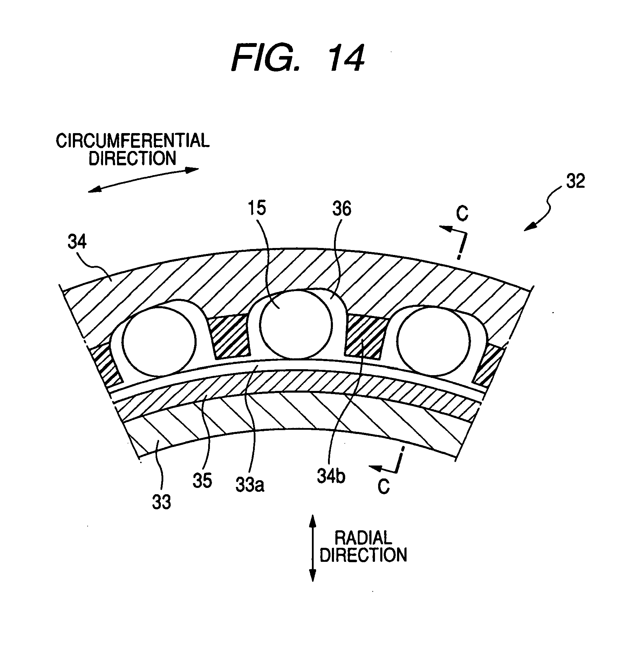

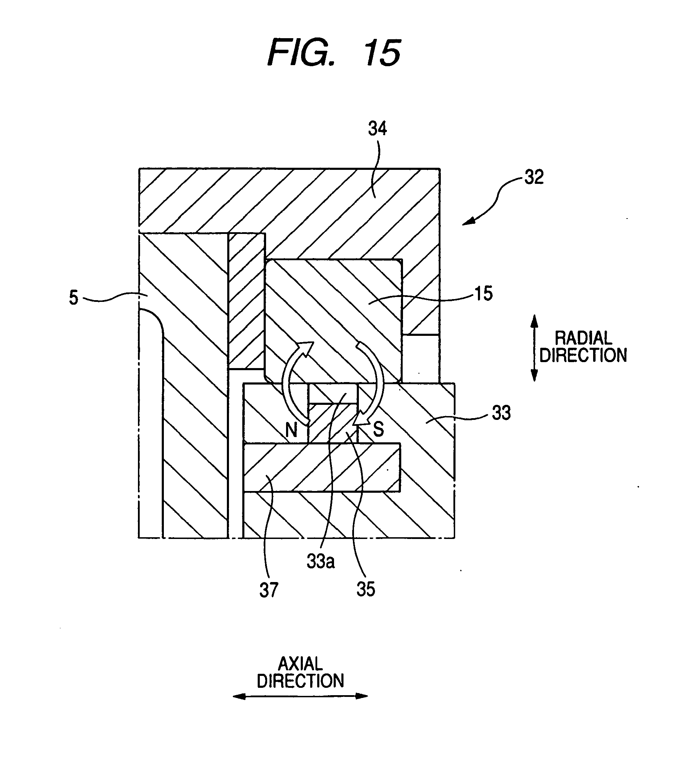

Fig. 12 is a longitudinal sectional view of the combination of a starter and a torque transmitting device according to the fifth embodiment, while Fig. 13 is a longitudinal sectional view of the upper half portion of the torque transmitting device shown in Fig. 12. Fig. 14 is an enlarged longitudinal sectional view of a portion of a clutch of the torque transmitting device shown in Fig. 13. Fig. 15 is a sectional view taken substantially along line C-C of Fig. 14.

As shown in Fig. 13, Fig. 14 and Fig. 15, a torque transmitting device 31 according to the fifth embodiment differs from the device 1 shown in Fig. 2 in that the device 31 has a one-way clutch 32 formed approximately in a cylindrical shape. The clutch 32 has a cylindrical-shaped inner 33, an approximately cylindrical-shaped outer 34 coaxially disposed with the inner 33 on the outer side of the inner 33 in the radial direction of the clutch 32, the rollers 15 disposed between the inner 33 and the outer 34 to be movable on the inner 33, and a magnet 35 fixedly disposed in the inner 33 along the circumferential direction of the clutch 32.

Each roller 15 is made of a ferromagnetic material such as iron and is formed in a columnar shape. The magnet 35 gives the magnetic force to the rollers 15 to attract the rollers 15 to the outer circumferential surface of the inner 33.

The outer 34 has a nail 34a forcibly pressed into the concave portion of the member 5 to be fixed to the member 5, in the same manner as the outer 13 shown in Fig. 2. Therefore, the outer 34 is rotatable with the member 5 in response to the engine torque of the engine along the rotational direction (counter- clockwise direction in Fig. 14). The outer circumferential surface of the outer 34 acts as a seal surface of the clutch 32 in the same manner as the outer 13. The outer 34 has a plurality of cam walls 34b projected toward the inner 33 to form a plurality of cam chambers 36 successively arranged along the circumferential direction in the open space between the inner 33 and outer 34. That is, the cam walls 34b 36 partition the open space into the cam chambers 36. In each cam chamber 36, one roller 15 is disposed. Each cam wall 34b is made of a non-magnetic material such as resin so as not receive the magnetic force from the magnet 35. The body of the outer 34 is made of metal to heighten the structural strength of the outer 34. The cam walls 34b are tightly attached to the main portion of the outer 34 by an adhesive or are tightly pressed into the body of the outer 34.

Each cam chamber 36 is formed between a cam surface formed on the inner circumferential surface of the outer 34 and the outer circumferential surface of the inner 33. Each cam surface of the cam chamber 36 is inclined with respect to the circumferential direction to form the cam chamber 36 in a wedge shape. Therefore, the width of each cam chamber 36 in the radial direction is gradually narrowed along the rotational direction of the outer 34 from the anti-wedge side (hereinafter, called unlock side) to the wedge side (hereinafter, called lock side) of the chamber 36. The width of the cam chamber 36 on the unlock side is wider than the diameter of the roller 15 to unlock the roller 15 on the unlock side, and the width of the cam chamber 14 on the lock side is narrower than the diameter of the roller 15 to lock the roller 15 on the lock side.

The inner 33 is disposed on the inner side of the ring gear 3 and is integrally formed with the gear 3 to be rotated with the gear 3 in response to the starting torque of the starter 2 along the same rotational direction as that of the outer 34. The outer circumferential surface of the inner 33 is formed in a circular shape in section. The inner 33 is made of a ferromagnetic material such as iron to strengthen the attraction force received from the magnet 35. Therefore, the rollers 15 can be effectively attracted to the outer circumferential surface of the inner 33.

The inner 33 and the member 3 may be separately formed and be attached to each other.

The inner 33 has a ring-shaped groove 33a formed on the outer circumferential surface of the inner 33. As shown in Fig. 15, the groove 33a is placed approximately at the center position of the rollers 15 in the axial direction of the clutch 32. The width of the groove 33a in the axial direction is shorter than the length of the rollers 15. The magnet 35 is disposed in the groove 33a in a ring shape. Therefore, the width of the magnet 35 in the axial direction is shorter than the length of the rollers 15, and the magnet 35 is placed approximately at the center position of the rollers 15 in the axial direction. The magnet 35 is magnetized such that one end of the magnet 35 in the axial direction of the clutch 32 is the N pole, while the other end of the magnet 35 is the S pole. The magnet 35 is placed to be lower than the inner circumferential surface of the inner 33 in the radial direction so as not to be directly in contact with the rollers 15.

A magnetic shielding member 37 is buried into the inner 33 on the inner side of the groove 33a in the radial direction of the clutch 32 to prevent magnetic flux generated between the magnet 35 and the rollers 15 from leaking from the clutch 32 through the inner 33. The shielding member 37 is made of a non-magnetic material such as resin. The shielding member 37 may be directly in contact with the magnet 35.

With this positional relationship among the magnet 35, the shielding member 37 and the rollers 15, lines (indicated by arrows in Fig. 15) of the magnetic force generated in the magnet 35 can effectively pass through the rollers 15, so that the rollers 15 always receive the attraction force from the magnet 35 so as to attract the rollers 15 to the inner 33.

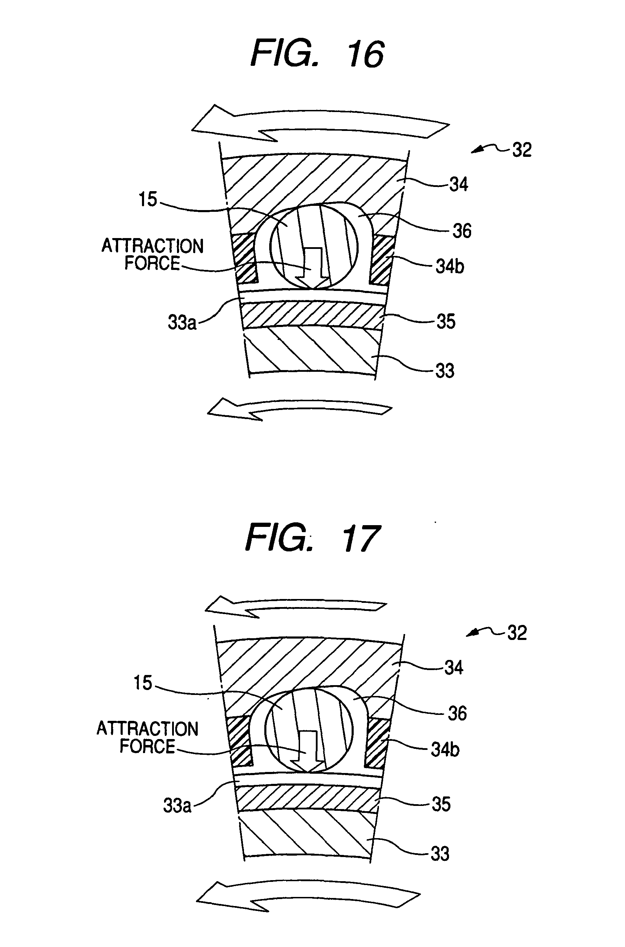

The operation of the torque transmitting device 32 will be described with reference to Fig. 16 and Fig. 17. Fig. 16 is an enlarged longitudinal sectional view of a portion of the clutch to show the operation of the clutch in the over-run state, while Fig. 17 is an enlarged longitudinal sectional view of a portion of the clutch to show the operation of the clutch at restart of the engine. The rotational speeds of the inner 33 and the outer 34 are indicated by respective arrows in each of Fig. 16 and Fig. 17.

When the ring gear 3 representing the first rotating member is rotated in response to the starting torque of the starter 2, the clutch 32 is set to the engaging state. More specifically, the outer 34 is at a standstill, and the rollers 15 are stuck to or pushed onto the inner 33 by the attraction force of the magnet 35. When the inner 12 is rotated with the ring gear 3, the rollers 15 are moved with the inner 33 toward the lock side of the cam chambers 36. As a result, each roller 15 is placed and locked between the cam surface of the outer 34 and the outer circumferential surface of the inner 33. Therefore, the starting torque is transmitted from the ring gear 3 to the crank shaft 4 through the clutch 32 and the flywheel 5 representing the second rotating member.

Then, when the engine is ignited due to the rotation of the crank shaft 4 so as to increase the engine speed, as shown in Fig. 16, the rotational speed of the outer 34 exceeds the rotational speed of the inner 33. That is, the clutch 32 is set to the over-run state. At this time, the attraction force attracting the rollers 15 to the inner 33 induces the rollers 15 to resist moving with the outer 34 moved at higher speed than that of the inner 33. Because the movement of the outer 34 along the circumferential direction is larger than that of the inner 33, the rollers 15 are moved with the inner 33 toward the unlock side of the cam chambers 36 moved with the outer 34. Then, when the rotational speed of the outer 34 reaches a specific value, the centrifugal force acting on the rollers 15 rotated around the rotational axis Ax becomes larger than the attraction force acting on the rollers 15, and the rollers 15 are centrifugally separated from the outer circumferential surface of the inner 33 against the attraction force. Therefore, the clutch 32 is raced. As a result, because the clutch 32 prevents torque transmission from the flywheel 5 to the ring gear 3, the engine torque of the engine is not transmitted to the starter 2.

Further, when the engine misfires, it is desired to restart the driving operation of the engine immediately after the misfiring in the engine. At this time, the engine speed is considerably reduced in response to the misfiring. Therefore, as shown in Fig. 17, the rotational speed of the outer 34 is rapidly decelerated., Because the rollers 15 are disposed in the cam chambers 36 moved with the outer 34, the rotational speed of the rollers 15 is decelerated in response to the deceleration of the outer 34, so that the centrifugal force acting on the rollers 15 is necessarily lowered. When the centrifugal force becomes smaller than the attraction force of the magnet 35 attracting the rollers 15 to the inner 33, the rollers 15 centrifugally separated are stuck to the outer circumferential surface of the inner 33 immediately after the misfiring so as to move with the inner 33. Because the rollers 15 are moved with the inner 33, the rollers 15 are moved toward the lock side of the cam chambers 36 moved with the outer 34, in response to the starting torque of the starter 2, so as to be locked between the cam surface of the outer 34 and the outer circumferential surface of the inner 33. Therefore, the starting torque is transmitted from the ring gear 3 to the crank shaft 4 through the clutch 32 and the flywheel 5.

As described above, the rollers 15 stuck to the inner 33 by the magnetic force of the magnet 35 are moved with the inner 33 toward the lock side of the cam chambers 36 in response to the starting torque of the starter 2 to transmit the starting torque to the engine. Further, when the rotation of the outer 34 exceeds that of the inner 33 in response to the engine torque, the rollers 15 stuck to the inner 33 by the magnetic force of the magnet 35 are centrifugally separated from the inner 33, so that the clutch 32 prevents torque transmission from the outer 34 to the inner 32. Therefore, the clutch 32 having the magnet 35 needs no springs biasing the rollers 15 toward the lock side.

Accordingly, in the clutch 32 having no springs according to this embodiment, because no spring chambers accommodating springs are needed, the number of cam chambers 36 accommodating rollers 15 can be increased. As a result, as compared with the conventional roller type clutch with springs, the number of rollers 15 in the clutch 32 can be increased, so that the clutch 32 can transmit a larger starting torque generated in the starter 2. In other words, when the starting torque transmitted in the clutch 32 is set to be the same as that in the conventional clutch, the clutch according to this embodiment can be downsized as compared with that of the conventional clutch.

Further, because the attraction force of the magnet 35 does not bias the rollers 15 toward the lock side, the separation rotational speed in the clutch 32 can be lowered.

Moreover, the attraction force F of the magnet 35 is weakened as the distance L between the magnet 35 and the roller 15 is lengthened (F is proportional to 1/L<2>). That is, when the roller 15 is slightly separated centrifugally from the inner 12 during the over-run state of the clutch 32, the attraction force is rapidly weakened, so that the roller 15 is stably separated centrifugally from the inner 12. Accordingly, after the clutch is transferred to the over-run state, the roller 15 can be centrifugally separated from the inner 12 at a sufficiently-lowered separation rotational speed, for example, equal to a rotational speed corresponding to the idling speed of the engine. Therefore, the separation rotational speed in the clutch 32 can be set to be considerably lowered as compared with that in the conventional clutch.

In this embodiment, because each cam wall 34b of the outer 34 is protruded from the body of the outer 34 toward the inner 33 so as to approach the magnet 35, the cam wall 34b is made of a non-magnetic material not to receive the magnetic force from the magnet 35. Therefore, the outer 24 can be smoothly rotated on the rotational axis Ax. However, when the tip of the cam wall 34b is placed approximately at the mid point of the cam chamber 36 in the radial direction, the distance between the cam wall 34b and the magnet 35 is considerably larger than the distance between the outer circumferential surface of the inner 33 and the magnet 35. In this case, the cam wall 34b may be made of metal. That is, the cam wall 34b made of metal substantially receives no magnetic force from the magnet 35.

Further, in this embodiment, the inner 33 is made of a ferromagnetic material to strengthen the attraction force acting on the rollers 15. However, the inner 33 may be made of a magnetic material or a non-magnetic material. Even when the inner 33 is made of a magnetic or non-magnetic material so as not to strengthen the attraction force, the magnet 35 having a sufficient magnetic force can attract the rollers 15 toward the outer circumferential surface of the inner 33.

Moreover, in this embodiment, the magnet 35 is formed in a ring shape so as to wholly extend along the circumferential direction. However, the magnet 35 may partially extend along the circumferential direction.

Furthermore, in this embodiment, the magnet 35 is buried into the inner 33 so as not to directly come in contact with the rollers 15. However, the magnet 35 may be disposed on the groove 33a of the inner 33 so as to directly come in contact with the rollers 15. Even when the rollers 15 are directly in contact with the magnet 35 during the over-run state of the clutch 32, the rollers 15 can be centrifugally separated from the inner 33 at a low separation rotational speed of the outer 34.

### EMBODIMENT 6

In this embodiment, in the same manner as in the second embodiment, the cam walls 34b of the outer 34 are modified to prevent the rollers 15 from being fluttered in the cam chambers 36.

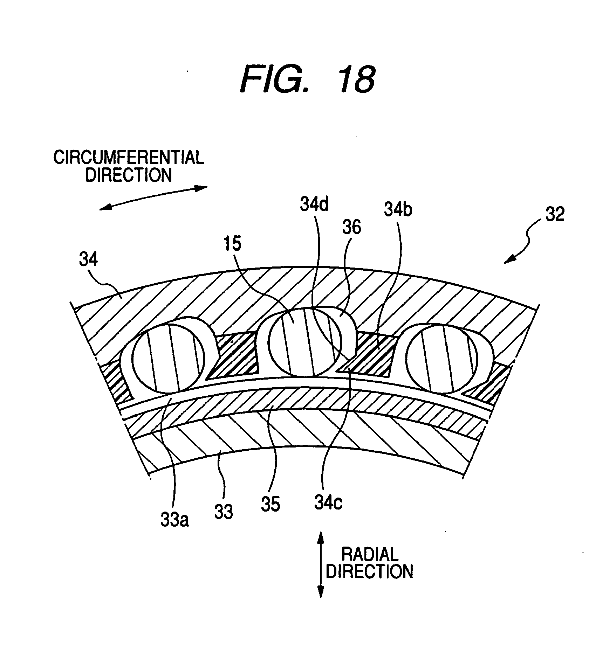

Fig. 18 is an enlarged longitudinal sectional view of a portion of the clutch 32 having the deformed cam walls 34b according to the sixth embodiment.

As shown in Fig. 18, each cam wall 34b of the outer 34 has a guide portion 34c extending toward a space between the outer circumferential surface of the roller 15 and the outer circumferential surface of the inner 33. The guide portion 34c is disposed on the unlock side of the corresponding cam chamber 36. The guide portion 34c is formed in a triangular shape in section so as to have a guide surface 34d facing the roller 15. The surface 34d is inclined with respect to the circumferential direction such that the rollers 15 stuck to the inner 33 by the magnet 35 and moved toward the unlock side of the cam chambers 36 in response to the rotational speed of the outer 34 at higher speed than the rotational speed of the inner 33 are disposed on the inclined surface 34d of the guide portion 34c. The guide portion 34c guides the rollers 15 disposed on the inclined surface 34d to be floated over the inner 33 and holds the rollers 15 to be stably floated over the outer circumferential surface of the inner 33 during the centrifugal separation.

With this structure of the cam walls 34b, when the rotational speed of the outer 34 exceeds the rotational speed of the inner 33 in response to the ignition of the engine, the rollers 15 stuck to the inner 33 by the magnet 35 are moved toward the unlock side of the cam chambers 36. When the rollers 15 are centrifugally separated from the outer circumferential surface of the inner 33, the guide portion 34c guides the roller 15 to be disposed on the inclined surface 34d of the guide portion 34c and to be floated over the outer circumferential surface of the inner 33. Further, when one roller 15 is induced to come in contact with the outer circumferential surface of the inner 33, the guide portion 34c induces the roller 15 disposed on the surface 34d to be floated over the outer circumferential surface of the inner 33. Therefore, the guide portions 34c of the outer 34 suppress the fluttering of the rollers 15.

Accordingly, the rollers 15 guided by the outer 34 can be stably rotated around the rotational axis Ax during the centrifugal separation, so that the guide portions 34c of the outer 34 can suppress the wear or abrasion of the rollers 15. That is, the deformation of the rollers 15 can be prevented, and the life time of the clutch 32 can be considerably increased.

Further, because the clutch 32 can reliablyprevent torque transmission during the centrifugal separation, the clutch 32 can be operated with higher performance.

In this embodiment, each guide portion 34c of the outer 34 is disposed on the unlock side of the cam chamber 36. However, the guide portion 34c may be disposed on the lock side of the cam chamber 36.

### EMBODIMENT 7

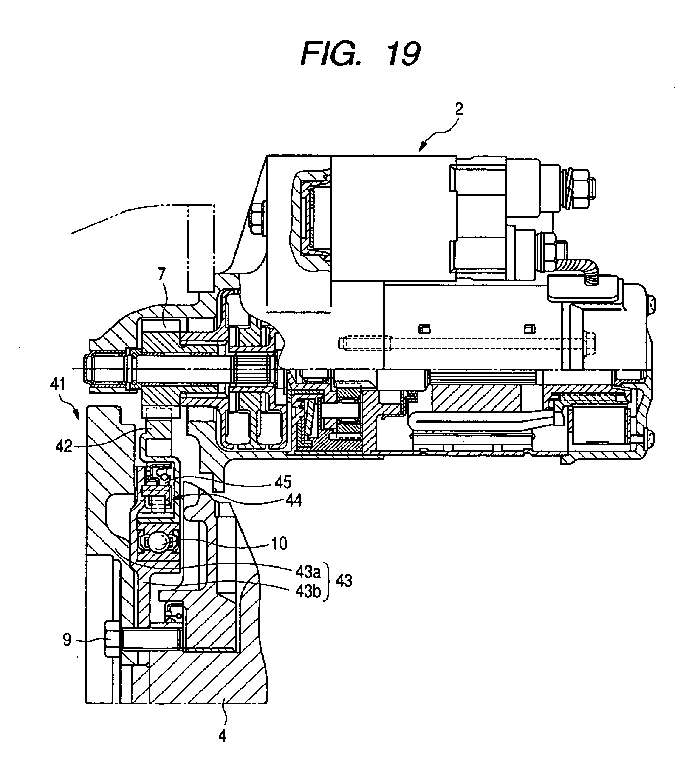

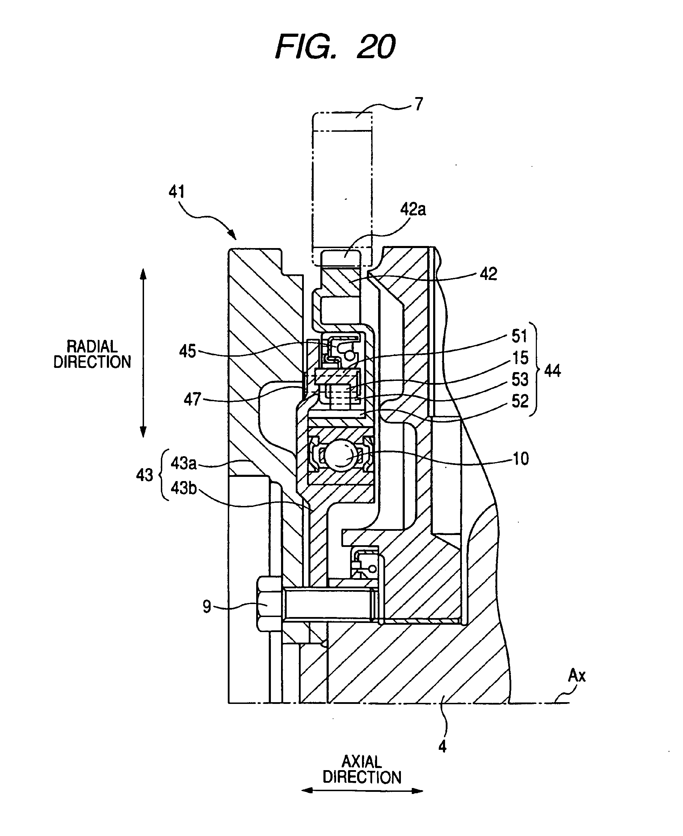

Fig. 19 is a longitudinal sectional view of the combination of a starter and a torque transmitting device according to the seventh embodiment of the present invention, while Fig. 20 is an enlarged longitudinal sectional view of the upper half portion of the torque transmitting device shown in Fig. 19.

As shown in Fig, 19 and Fig. 20, a torque transmitting device 41 for starting the driving operation of an engine has a first rotating member 42 rotated with the pinion gear 7 of the starter 2, a second rotating member 43 fixed to the crank shaft 4 of an engine (not shown) to be rotated with the shaft 4, a one-way clutch 44 formed approximately in a cylindrical shape and disposed between the rotating members 42 and 43, and a seal member 45 for sealing lubricant (e.g., grease having high viscosity) packed into the clutch 44 to prevent the lubricant from flowing out from the clutch 44. The seal member 45 is fixed to the member 3. This device 41 is, for example, applied for an idling stop system or an engine automatic stop and start system (EASS).

The second rotating member 43 has a flywheel 43a of a manual transmission (MT) type vehicle (or a drive plate 43a of an automatic transmission (AT) type vehicle) and an intermediate plate 43b fixed to an end of the crank shaft 4 by the bolts 9.

The first rotating member 42 is a ring gear formed in a ring shape. The ring gear 42 has a cylindrical hole at its center in its radial direction and teeth 42a successively disposed on the peripheral portion of the gear. The crank shaft 4 is disposed in the hole of the gear 42. The pinion gear 7 of the starter 2 always meshes with the teeth 42a of the gear 42. The ring gear 42 is attached to the intermediate plate 43b through the bearing 10 such that the gear 42 and the plate 43b are rotatable relative to each other on a rotational axis (or center axis) Ax of the device 41.

The gear 42 has a concave space on its side surface facing the plate 43b along the axial direction. This concave space is partitioned into a clutch space and a seal space disposed on the outer side of the clutch space in the radial direction of the device 41. The clutch 44 is disposed in the clutch space, and the seal member 45 is disposed in the seal space.

The clutch 44 has a cylindrical outer 51, a cylindrical inner 52 coaxially placed with the outer 51 on the inner side of the outer 51 in the radial direction of the clutch 44, the rollers 15 disposed between the outer 51 and the inner 52 to be movable on the inner 52, springs (not shown) directly or indirectly pushing the respective rollers 15 toward one side of the circumferential direction of the clutch 44, and a retainer 53 (representing an inertia member) disposed between the outer 51 and the inner 52 to be movable with the rollers 15 in the same direction as the moving direction of the rollers 15.

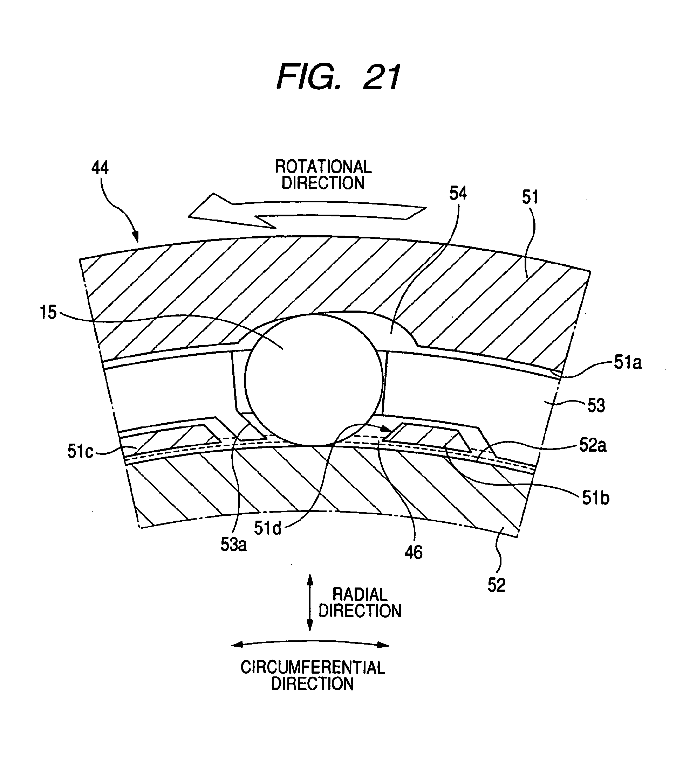

The outer 51 is fixed to the intermediate plate 43b by rivets 47 so as to be rotated with the plate 43b along the rotational direction (counter-clockwise direction in Fig. 21). The inner 52 is fixed to the ring gear 42 so as to be rotated with the gear 42 along the same rotational direction as that of the outer 51.

Fig. 21 is an enlarged longitudinal sectional view of a portion of the clutch 44 of the device 41 shown in Fig. 20.

As shown in Fig. 21, the outer 51 has a cam surface 51a on its inner circumferential surface. The cam surface 51a has a plurality of depressions at equal intervals along the circumferential direction of the clutch 44. Each depression is sunk toward the outer side of the clutch 44 so as to change the depth of the depression along the circumferential direction. A cam chamber 54 is formed in a wedge shape between each depression of the cam surface 51a and the outer circumferential surface 52a of the inner 52. The width of each cam chamber 54 is changed along the rotational direction from a wide width side (i.e., unlock side) to a narrow width side (i.e., lock side) of the chamber 54. The rollers 15 are disposed in the respective cam chambers 16.

The outer 51 has a wall portion extending toward the inner 52 on its one axial end, a plurality of first outer protrusions 5 1 b extending from the wall portion along the axial direction on the unlock side of the respective cam chambers 16, and a plurality of second outer protrusions 51c extending from the wall portion along the axial direction on the lock side of the respective cam chambers 16. Each protrusion is placed over the outer circumferential surface 52a of the inner 52.

Each protrusion 51b is placed such that the roller 15 of the corresponding chamber 54 comes in contact with the protrusion 51b when the roller 15 rotated with the inner 52 is moved toward the unlock side of the chamber 54. Each protrusion 51b is placed between the center of the roller 15 and the inner 52 in the radial direction. Each protrusion 5 1 b comes in contact with a portion of the roller 15 placed nearer to the inner 52 than the center of the roller 15. In other words, each protrusion 51 b comes in contact with a portion of the roller 15 placed toward the side of the inner 52 from the center of the roller 15.

Each protrusion 51b has a contact surface 51d on its one circumferential side so as to face the roller 15. The surface 51d is inclined with respect to the radial direction such that the surface 51d faces toward the outer 51 and extends approximately in parallel to the slope of the tangent at the portion of the roller 15 coming in contact with the protrusion 51b.

The inner 52 is pressed into the clutch space of the gear 42 to be fixed to the gear 42. Each roller 15 is always pushed by the spring toward the lock side of the chamber 54.

The retainer 53 is approximately formed in a ring shape and is disposed between the outer 51 and the inner 52 to be spaced apart from the outer 51 and inner 52. The retainer 53 extends all over the surfaces 51a and 52a of the outer 51 and inner 52 along the circumferential direction. The retainer 53 has a plurality of rectangular-shaped openings at the respective chambers 54, and the rollers 15 are placed in the respective openings.

The retainer 53 has a plurality of guide surfaces 53a on the lock side of the respective chambers 54 such that the guide surface 53a and the protrusion 51b in each chamber 54 face each other through the roller 15 between. Each guide surface 53a is placed to come in contact with the roller 15 when the roller 15 moved with the retainer 53 toward the unlock side of the chamber 54 comes in contact with the protrusion 51b so as to be rotated with the outer 12. Each surface 53a is placed between the center of the roller 15 and the inner 52. Each surface 53a comes in contact with a portion of the roller 15 placed nearer to the inner 52 than the center of the roller 15. Each surface 53a is inclined with respect to the radial direction such that the surface 53a faces toward the outer 51 and extends approximately in parallel to the slope of the tangent at the portion of the roller 15 coming in contact with the surface 53a. Therefore, when the surface 53a comes in contact with the roller 15, the surface 53a enters into a space between the roller 15 and the inner 52 so as to cause the roller 15 coming in contact with the protrusion 51b to keep floating over the outer circumferential surface 52a of the inner 52.

The seal member 45 (see Fig. 20) is, for example, formed of an oil seal. The member 45 has a lip portion made of rubber. The lip portion is slidably pressed onto the outer circumferential surface of the outer 51 rotated with the member 43 to prevent grease 46 from leaking from the clutch 44.

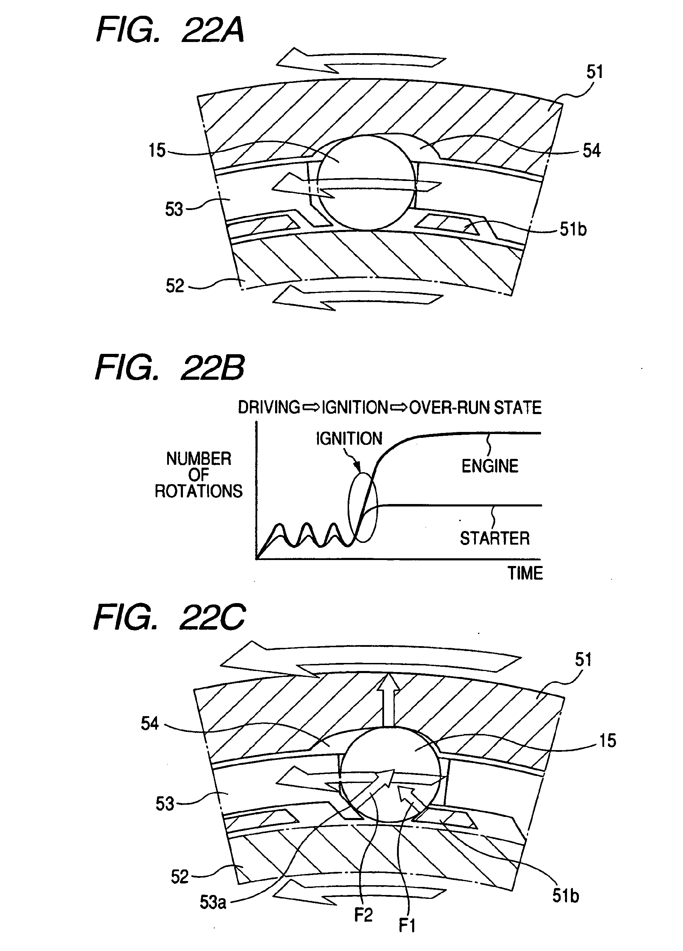

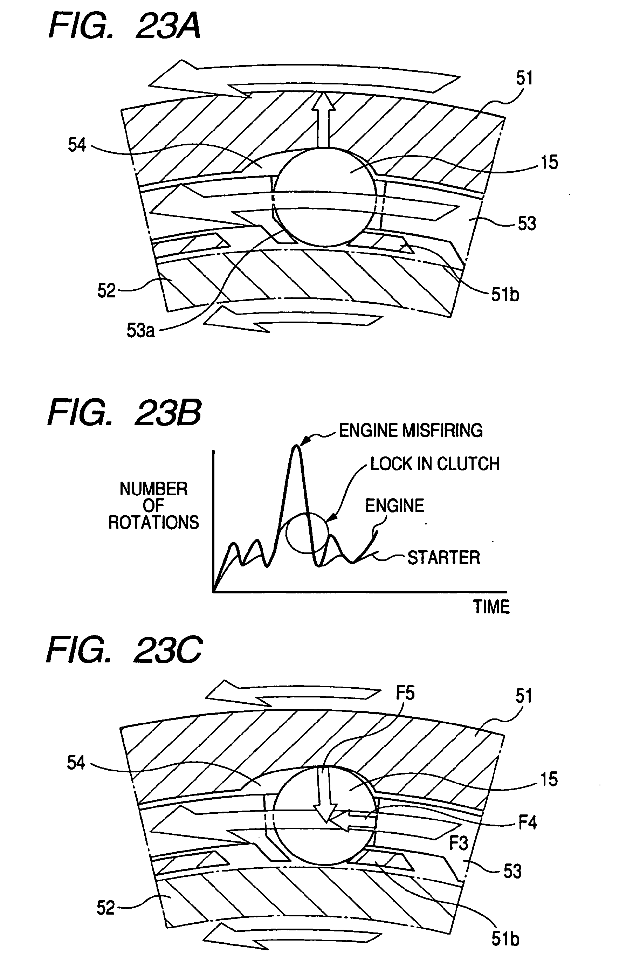

The operation of the clutch 44 will be described with reference to Fig. 22A to Fig. 22C and Fig. 23A to Fig. 23C. Fig. 22A is an enlarged longitudinal sectional view of a portion of the clutch 44 to show the roller 15 moved toward the lock side, Fig. 22B shows the engine speed rapidly heightened in response to the ignition of the engine, and Fig. 22C is an enlarged longitudinal sectional view of a portion of the clutch 44 to show the roller 15 receiving floating forces from the outer 52 and the retainer 53 in the over-run state.

When the gear 42 is rotated in response to the starting torque of the starter 2, the clutch 44 is set to a starting torque transmission state, and the second rotating member 43 is rotated with the gear 42. More specifically, in the clutch 44, the outer 51 is at a standstill. When the inner 52 is rotated with the gear 42, each roller 15 is rotated with the inner 52 so as to be moved toward the lock side of the cam chamber 54. Therefore, as shown in Fig. 22A, the roller 15 is locked between the cam surface 51a of the outer 51 and the outer circumferential surface of the inner 52, the starting torque of the starter 2 is transmitted to the crank shaft 4 through the gear 42, the clutch 44 and the member 43 in that order. Then, the cranking is started.

Thereafter, as shown in Fig. 22B, in response to the rotation of the crank shaft 4, the engine is ignited so as to increase the engine speed. Therefore, as shown in Fig. 22C, the rotational speed (indicated by the larger arrow) of the outer 51 is rapidly increased so as to exceed the rotational speed (indicated by the smaller arrow) of the inner 52, and the clutch 44 is transferred to the over-run state.

The retainer 53 has its inertial mass, so that the retainer 53 intends to be rotated with the inner 52 as if the retainer 53 is at a standstill on the rotated inner 52. In response to the over-run state of the clutch 44, the inertial force based on the inertial mass of the retainer 53 is generated in the retainer 53, and the inertial force of the retainer 53 induces the rollers 15 disposed in the openings of the retainer 53 to move with the inner 52 as if the rollers 15 are at a standstill on the rotated inner 52. Therefore, the rollers 15 are quickly moved toward the unlock side of the cam chambers 54 moved with the outer 51, and each roller 15 moved with the retainer 53 comes in contact with or collides with the protrusion 51b of the outer 51.

In response to this collision, the protrusion 51b pushes a portion of the roller 15 placed nearer to the inner 52 than the center of the roller 15 at a reaction force F1 (see an arrow in Fig. 22C) to move the roller 15 with the outer 51. Further, because the portion of the roller 15 pushed by the protrusion 51b is placed nearer to the inner 52, the reaction force F1 of the protrusion 51 b inevitably has the component of force directed toward the outer 51, so that the reaction force F1 induces the roller 15 to be centrifugally separated from the inner 52. Therefore, the protrusion 51b induces the roller 15 to be quickly floated over the outer circumferential surface 12a of the inner 52.

Further, the surface 51d of the protrusion 51b is inclined such that the surface 51d extends in parallel to the slope of the tangent at the portion of the roller 15 pushed by the protrusion 51b. Therefore, the reaction force F1 of the protrusion 51b can be directed to be substantially perpendicular to the surface 51 d, and the roller 15 can be smoothly floated over the inner 52 without causing any damage in the roller 15.

Moreover, when each protrusion 51b of the outer 51 pushes the roller 15 rotated with the inner 52 and moved with the retainer 53 to rotate the roller 15 with the outer 51, the surface 53a of the retainer 53 moved with the inner 52 comes in contact with or collides with the roller 15. In this case, the surface 53a enters into the space between the roller 15 and the inner 52 and pushes another portion of the roller 15 placed nearer to the inner 52 than the center of the roller 15 at a pushing force F2 (see an arrow in Fig. 22C). Because the portion of the roller 15 pushed by the surface 53a is placed nearer to the inner 52, the pushing force F2 inevitably has the component of force directed toward the outer 51. Therefore, the surface 53a of the retainer 53 induces the roller 15 to keep floating over the inner 52.

Furthermore, the surface 53a is inclined such that the surface 53a extends in parallel to the slope of the tangent at the portion of the roller 15 pushed by the surface 53a. Therefore, the pushing force F2 of the retainer 53 can be directed to be substantially perpendicular to the surface 53a, and the roller 15 can smoothly keep floating over the inner 52 without causing any damage in the roller 15.

Fig. 23A is an enlarged longitudinal sectional view of a portion of the clutch 44 to show the roller 15 rotated with the outer 51 in the over-run state, Fig. 23B shows the engine speed rapidly reduced in response to the misfiring in the engine and rapidly heightened in response to the restart of the engine, and Fig. 23C is an enlarged longitudinal sectional view of a portion of the clutch 44 to show the roller 15 moved toward the lock side in response to the restart of the engine.

As shown in Fig. 23A, during the over-run state, the unlocked rollers 15 and the retainer 53 are rotated with the outer 51 while the rollers 15 float over the inner 52. As shown in Fig. 23B, when the engine misfires, it is desired to restart the driving operation of the engine immediately after the misfiring in the engine. At this time, the engine speed is considerably reduced in response to the misfiring, and the rotational speed of the outer 51 is rapidly decelerated.

In this case, as shown in Fig. 23C, the rollers 15 being centrifugally separated from the inner 52 and being in contact with the outer 51 intend to be rotated with the outer 51. In contrast, because the retainer 53 has its inertial mass, the retainer 53 receives the inertial force F3 based on the inertial mass. Therefore, the retainer 53 rotated with the inner 52 intends to keep its rotational speed higher than that of the outer 52, and the retainer 53 pushes each roller 15 rotated with the outer 51 at a pushing force F4 from the unlock side to the lock side of the chamber 54. Because the width of the cam chamber 54 on the lock side is narrower than that on the unlock side, the outer 52 pushes the roller 15 moved in response to the pushing force F4 toward the inner 52 at a pushing force F5. That is, in response to the misfiring, the retainer 53 forcibly brings the rollers 15 into contact with the inner 52 and rapidly locks the rollers 15 between the outer 51 and the inner 52.

Further, when misfiring occurs in the engine, the starting torque of the starter 2 is transmitted to the inner 52 in response to the misfiring, and the starting torque is transmitted to the crank shaft 4 of the engine through the clutch 44 set to the torque transmission state. At this time, in the same manner as in the first embodiment, because the retainer 53 induces the rollers 15 to be rapidly locked between the outer 51 and the inner 52, the clutch 44 can immediately transmit the starting torque of the starter 2 to the crank shaft 4 of the engine, and the driving operation of the engine can be restarted in a short time.

Accordingly, because the protrusions 51b of the outer 51 induce the rollers 15 to be quickly floated over the outer circumferential surface 12a of the inner 52, the separation rotational speed of the outer 51 can be lowered. As a result, the wear of the rollers 15 sliding on the inner 52 in the over-run state can be considerably reduced, and the life time of the clutch 44 can be considerably lengthened.

Further, as compared with a conventional roller type clutch having no retainer, the roller 15 can perform the centrifugal separation from the outer circumferential surface 52a of the inner 52 at a lower separation rotational speed. For example, the separation rotational speed can be set to be equal to or lower than a rotational speed of the outer 51 corresponding to the idling speed of the engine. As a result, the wear of the rollers 15 sliding on the inner 52 in the over-run state can be further reduced, and the life time of the clutch 44 can be further lengthened.

Moreover, because the surface 51d of each protrusion 51b is inclined with respect to the radial direction so as to face toward the outer 51, the roller 15 can be smoothly floated over the inner 52 without causing any damage in the roller 15.

Furthermore, because the retainer 53 has the surfaces 53a, each surface 53a of the retainer 53 moved with the inner 52 can push the roller 15 at a pushing force directed toward the outer 51. Accordingly, the surfaces 53a of the retainer 53 can induce the rollers 15 to keep floating over the inner 52.

Furthermore, because each surface 53a of the retainer 53 is inclined with respect to the radial direction so as to face toward the outer 51, the retainer 53 can induce the roller 15 to smoothly keep floating over the inner 52 without causing any damage in the roller 15.

Furthermore, the retainer 53 is in contact with the inner 52 through grease 46 having a high viscosity. Therefore, this grease 46 heightens the sliding resistance occurring between the inner 52 and the retainer 53 sliding on the inner 52. When the outer 42 starts the high speed rotation, the viscosity resistance caused by the grease 46 between the inner 52 and the retainer 53 induces the retainer 53 to resist moving with the outer 52. That is, this viscosity resistance heightens the inertial force acting on the retainer 53. Accordingly, the separation rotational speed in the clutch 44 can be further lowered, so that the freedom in design of the device 41 can be heightened.

In this embodiment, the retainer 53 has the guide surfaces 53a. However, even when the retainer 53 has no guide surface, the clutch 44 having the outer 51 with the projections 51b and the retainer 53 can lower the separation rotational speed.

### EMBODIMENT 8

In this embodiment, a plurality of rollers are always pushed by a plurality of springs through a retainer toward the rotational direction of an outer or inner (i.e., lock side of chambers) in a one-way clutch, and the number of springs is set to be smaller than the number of rollers such that a spring force received in each roller becomes smaller than the biasing force of one spring so as to quickly move the rollers toward the unlock side of the chambers against the biasing forces of the springs. For example, the number of springs is set at one-third of the number of rollers.

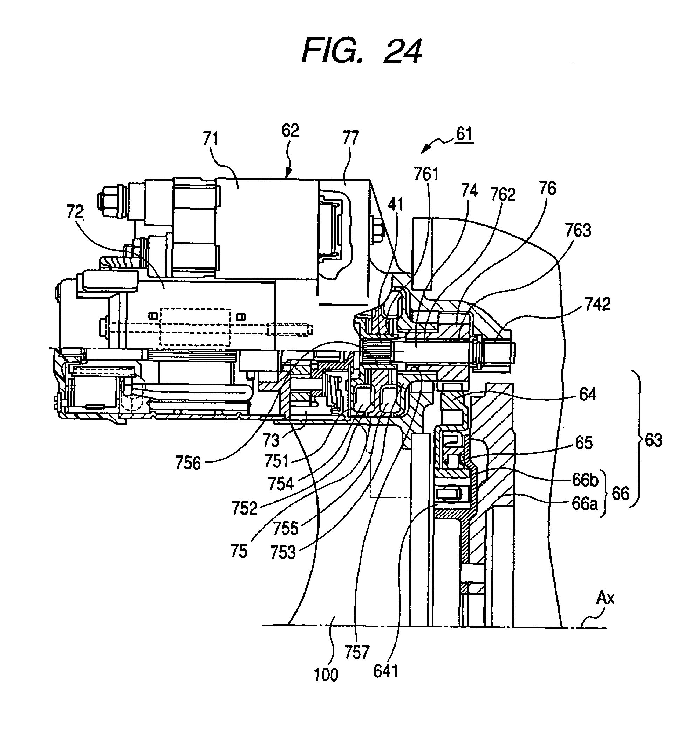

Fig. 24 is a longitudinal sectional view of an engine starting apparatus having a starter and a torque transmitting device according to the eighth embodiment of the present invention.

As shown in Fig. 24, an engine starting apparatus 61 is always connected with an engine 100 and starts the engine 100 in response to a starting instruction. This apparatus 61 is used for an idling stop system wherein the engine 100 is automatically stopped and restarted. The apparatus 61 has a starter 62 for generating a starting torque and a torque transmitting device 63 for transmitting the starting torque of the starter 62 to a crank shaft (not shown) of the engine 100 and preventing the transmission of an engine torque from the engine 100 to the starter 62. The starter 62 is disposed at a predetermined position adjacent to the crank shaft of the engine 100.

The device 63 has a ring gear (representing a first rotating member) 64, a one-way clutch 65, and a second rotating member 66. The member 66 has a flywheel 66a of a manual transmission (MT) type vehicle (or a drive plate 66a of an automatic transmission (AT) type vehicle) and an intermediate plate 66b fixed to an end of the crank shaft.

The starter 62 has an electromagnetic switch 71, a motor 72, a speed reducer 73, an output shaft 74, a shock absorber 75, a pinion 76, and a housing 77 covering the constitutional elements 71 to 76 of the starter 62.

The switch 71 is disposed on the upper rear side of the housing 77 to supply electric power to the motor 72 through contact points (not shown).

The motor 72 is a direct current type motor. The motor 72 generates a rotational force required to start the engine 5. The motor 72 is disposed adjacent to the switch 71 on the lower rear side of the housing 77.

The speed reducer 73 is a planet gear type speed reducer. The speed reducer 73 reduces the rotational speed of the motor 72 and transmits the rotational force having the reduced rotational speed to the output shaft 74. The speed reducer 73 is disposed adjacent to the motor 72.

The output shaft 74 is made of metal formed approximately in a columnar shape and transmits the rotational force having the reduced rotational speed to the shock absorber 75. The output shaft 74 has a serration 41 on its outer circumferential surface on the rear side thereof. The rear end of the shaft 74 is fixed to the reducer 73. The front end of the shaft 74 is rotatably supported by the housing 77 through a bearing 742.

The shock absorber 75 transmits the rotational force of the shaft 74 to the pinion 76 while absorbing a shock torque or the like generated at the start time of the engine 100 to reduce the shock transmitted to the speed reducer 73. The absorber 75 has casings 751 to 753 and two resilient parts 754 and 755. The casing 751 has a serration 756 on the inner circumferential surface thereof. The casing 753 has a serration 757 on the inner circumferential surface thereof. The serration 756 of the casing 751 is fitted to the serration 741 of the shaft 74. The resilient part 754 is disposed between the casings 752 and 753. The rotational force of the shaft 74 is transmitted to the casing 753 through the resilient part 755. The resilient parts 754 and 755 surrounded by the casings 751 to 753 absorb the shock torque or the like.

The pinion 76 is made of metal formed in a cylindrical shape. The pinion 76 has a serration 761 on its outer circumferential surface. This serration 761 is fitted to the serration 757 of the casing 753 of the absorber 75. The pinion 76 is rotatably supported by the shaft 74 through bearings 762 and 763. The pinion 76 transmits the rotational force of the shaft 74 to the ring gear 64.

The ring gear 64 of the device 63 is made of metal formed approximately in a disk shape. The gear 64 is rotatably supported by the plate 66b of the member 66 fixed to the crank shaft of the engine 100 through a bearing 641. The gear 64 is always meshed with the pinion 76. The gear 64 transmits the rotational force of the pinion 76 to the engine 100 through the clutch 65.

The clutch 65 is disposed in a space formed in the gear 64. The clutch 65 transmits the rotational force (i.e., starting torque) of the gear 64 to the engine 100. When the engine speed exceeds the number of rotations in the gear 64, the clutch 65 is raced to prevent the transmission of the rotational force to the engine 100.

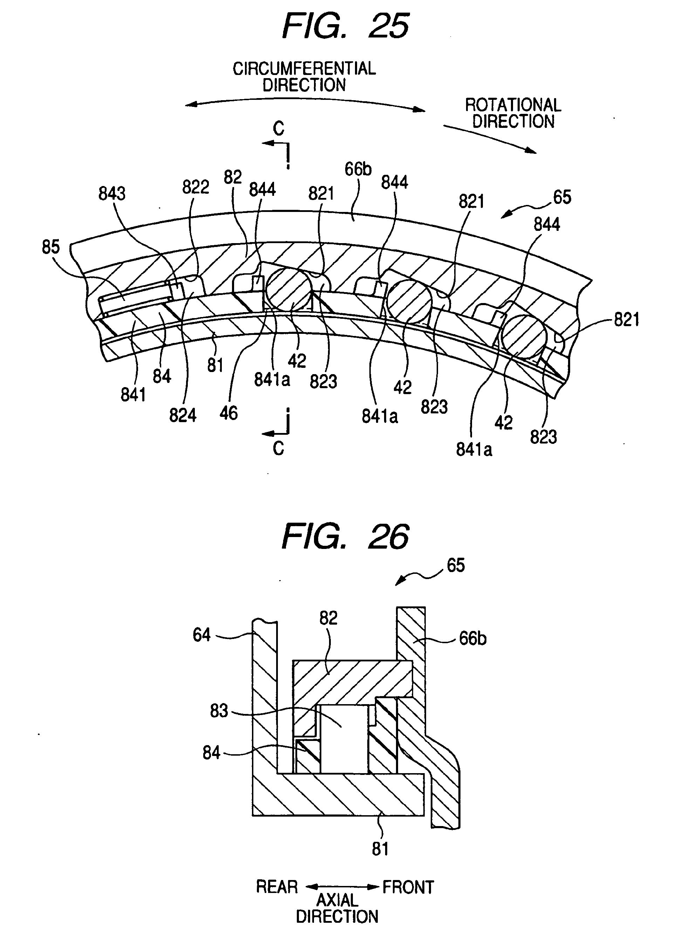

Fig. 25 is an enlarged sectional view of a portion of the clutch 65, while Fig. 26 is a sectional view taken substantially along line C-C of Fig. 25.

As shown in Fig. 25 and Fig. 26, the clutch 65 has a clutch inner 81 being rotated in a rotational direction (i.e., clockwise direction in Fig. 25) in response to the starting torque received from the gear 64, a clutch outer 82 coaxially disposed with the inner 81 on the outer side of the inner 81 and being rotated in the rotational direction in response to the engine torque received from the member 66, a plurality of clutch rollers 83 disposed between the inner 81 and the outer 82 so as to be movable on the inner 81, a plurality of springs 85 (representing elastic members) disposed between the inner 81 1 and the outer 82 so as to produce respective biasing forces directed in the rotational direction, and a retainer (representing a force transmitting member) 84 disposed between the inner 81 and the outer 82 to receive the biasing forces of the springs 85 and to push the rollers 83 in the rotational direction at the biasing forces.

The inner 81 is made of metal formed in a cylindrical shape. The inner 81 is integrally formed with the ring gear 64 to be rotated with the gear 64 along the rotational direction.

The outer 82 is made of metal formed in a cylindrical shape. The outer 82 is fixed to the plate 66b so as to be rotated with the plate 66b along the same rotational direction as that of the inner 81. Further, when the rollers 83 are locked between the inner 81 and the outer 82, the outer 82 is rotated along the rotational direction in response to the rotation of the inner 81. That is, the clutch 65 transmits the rotational force of the gear 64 to the engine 100 through the inner 81, the rollers 83 and the outer 82.

The outer 82 has a plurality of slant bottom grooves 821 and a plurality of flat bottom grooves 822 on the inner circumferential surface thereof. The grooves 821 and 822 are serially disposed at equal intervals along the circumferential direction of the clutch 65. One groove 822 is, for example, placed every four grooves such that a set of one groove 822 and three grooves 821 is repeatedly arranged along the circumferential direction.

A clutch cam chamber 823 is formed in a wedge shape between the outer circumferential surface of the inner 81 and each groove 821. The width of each chamber 823 in the radial direction of the outer 82 is gradually narrowed along the rotational direction (i.e., toward right side of circumferential direction in Fig. 25) from the unlock side to the lock side of the chamber 823. The rollers 83 are disposed in the respective chambers 823. A spring chamber (representing an elastic member chamber) 824 is formed between the outer circumferential surface of the inner 81 and each groove 822. The widthof each chamber 824 in the radial direction is approximately constant. The springs 85 are disposed in the respective chambers 824. Therefore, one spring 85 is placed every three rollers 83.

Each roller 83 is made of metal formed in a columnar shape, and the axial direction of the roller 83 is the same as the axial direction of the inner 81 and outer 82. The roller 83 is slidably moved on the inner 81 in the chamber 823. Each roller 83 mechanically connects the inner 81 and the outer 82 when the roller 83 moved toward the lock side of the chamber 823 is locked between the inner 81 and the outer 82. The rollers 83 mechanically disconnect the outer 82 from the inner 81 when the rollers 83 are moved toward the unlock side of the chamber 823.

The retainer 84 is made of resin formed approximately in a cylindrical shape.

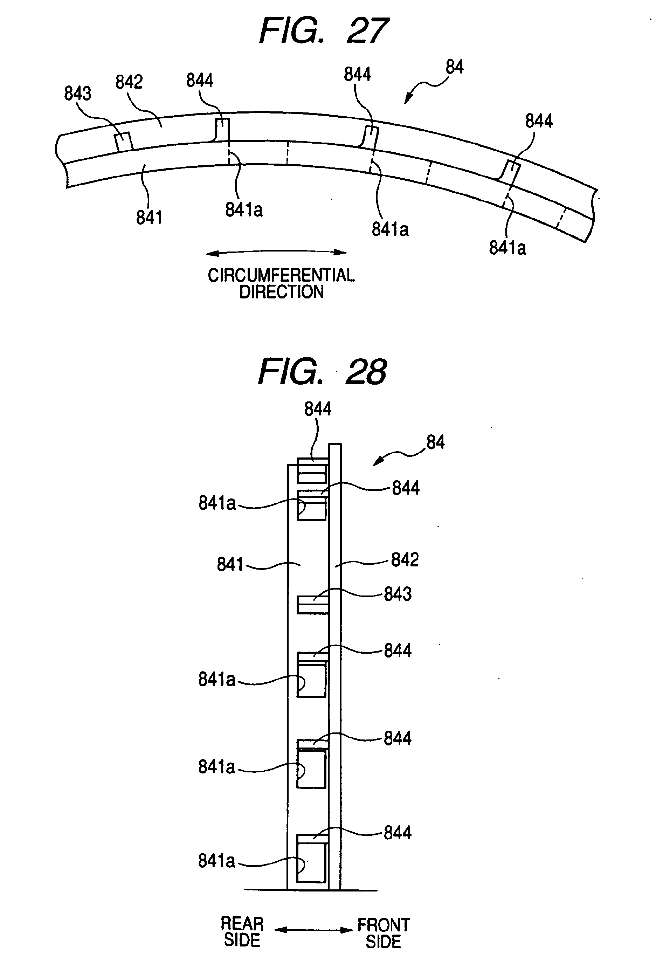

Fig. 27 is a back view of a portion of the retainer 84 seen from the rear side of the clutch 65, while Fig. 28 is a side view of a portion of the retainer 84 seen from the outer side of the clutch 65 in the radial direction.

As shown in Fig. 27 and Fig. 28, the retainer 84 has a cylindrical body portion 841 extending along the circumferential direction of the clutch 65,and a ring-shaped brim portion 842 extending along the circumferential direction on the front side of the body portion 841. The portion 841 of the retainer 84 has a plurality of openings 841 a at the respective chambers 823, and the rollers 83 are placed in the respective openings 841 a. The retainer 84 is movable with the rollers 83 in the same direction as the moving direction of the rollers 83 between the inner 81 and the outer 82.

As shown in Fig. 25, Fig. 27 and Fig. 28, the retainer 84 has a plurality of biasing force receiving walls 843 (representing force receiving parts) protruding from the outer circumferential surface of the portion 841 into the respective spring chamber 824 and a plurality of roller pushing walls (representing roller pushing parts) 844 protruding from the outer circumferential surface of the portion 841 into the respective chambers 823 on one circumferential side (i.e., left side in Fig. 25) of the respective openings 841 a. Each wall is formed approximately in a rectangular parallelepiped.

Each spring 85 placed in the chamber 823 is made of a metallic member formed in a coil shape. One end of the spring 85 is fixedly attached to one circumferential side surface (i.e., left side surface in Fig. 25) of the chamber 823, and the other end of the spring 85 is brought into contact with the wall 843 of the retainer 84. The spring 85 produces a biasing force pushing the wall 843 in the rotational direction. Therefore, the walls 843 of the retainer 84 receive the biasing forces of the springs 85 directed in the rotational direction. The walls 844 of the retainer 84 push the respective rollers 83 toward the lock side of the chambers 823 at the biasing forces transmitted from the walls 843 through the body portion 841. Therefore, the springs 85 indirectly push the rollers 83 toward the lock side of the chambers 823 through the retainer 84.

In this embodiment, the number of rollers 83 is equal to three times that of springs 85. Therefore, each roller 83 receives only one-third of the biasing force of one spring 85 directed toward the lock side of the chamber 823. As compared with the prior art wherein one spring pushes only one roller, the weight or mass of rollers substantially pushed by one spring toward the lock side is increased. In other words, the biasing force received in each roller 83 is reduced relative to that in the prior art. In this case, when the clutch 65 is set to the over-run state, the rollers 83 having the inertial mass can be quickly moved toward the unlock side of the chambers 823 against the biasing force of the springs 85, and the rollers 83 can be centrifugally separated from the inner 81 at a lower separation rotational speed.

The rollers 83 are in contact with the inner 81 through grease or lubricating oil 46 having a high viscosity to reduce the frictional resistance between each roller 83 and the outer circumferential surface of the inner 81, the frictional resistance between each roller 83 and the groove 821 of the outer 82, and wear of the rollers 83.

The operation of the engine starting apparatus 61 will be described with reference to Fig. 24, Fig. 25 and Fig. 26.

As is well known, when the apparatus 61 receives an engine start instruction from a control unit (not shown), electric current is fed to the switch 71. The switch 71 connects contact points to supply electric power to the motor 72 through the contact points. The motor 72 generates a rotational force. The rotational speed of this force is reduced in the speed reducer 73, and the rotational force is transmitted to the pinion 76 through the output shaft 74 and the shock absorber 75. The rotational force (i.e., starting torque) of the pinion 76 is transmitted to the inner 81 of the clutch 65 through the ring gear 64 always meshed with the pinion 76.

Therefore, in the clutch 65 according to this embodiment, the inner 81 is rotated along the rotational direction (clockwise direction in Fig. 25). At this time, the outer 82 determining the position of the chambers 823 is not substantially rotated, so that there is a difference in rotational speed between the inner 81 and the outer 82.

In response to the rotation of the inner 81, the rollers 83 are moved toward the lock side of the chambers 823 while being indirectly pushed toward the lock side by the springs 85 through the retainer 84, and the rollers 83 are locked between the inner 81 and the outer 82. Therefore, the outer 82 is mechanically connected with the inner 81 through the rollers 83, and the rotational force of the inner 81 is transmitted to the outer 82. Then, the flywheel 66a receives the rotational force of the outer 82 through the plate 66b and is rotated. Therefore, the cranking in the engine 100 is started, the driving operation of the engine 100 is started, and the outer 82 receives an engine torque of the engine 100.

Thereafter, when the rotational speed of the outer 82 exceeds the rotational speed of the inner 81, the clutch 65 is set to the over-run state. At this time, because the springs 85 indirectly push the rollers 83 toward the lock side of the chambers 823 through the retainer 84, the springs 85 prevent the rollers 83 from being moved toward the unlock side of the chambers 823. Thereafter, when the rotational speed of the outer 82 is further increased to a predetermined value, the rollers 83 are moved toward the unlock side of the chambers 823 against the biasing forces of the springs 85 to unlock the outer 82 from the inner 81, and the rollers 83 are centrifugally separated from the inner 81.

In this embodiment, because the number of springs 85 is equal to one-third of the number of rollers 83, each roller 83 substantially receives only one-third of the biasing force of one spring 85. Therefore, as compared with a case where each spring pushes only one roller toward the lock side, the weight or mass of rollers substantially receiving the biasing force of one spring is larger than that of one roller. That is, after the clutch 65 is set to the run-over state, the rollers 83 can be quickly moved toward the unlock side of the chambers 823 against the biasing force of the springs 85, and the rollers 83 rotated with the inner 81 on the center axis Ax of the clutch 65 can be easily separated from the inner 81 at a lower separation rotational speed of the outer 82.

Thereafter, as is well known, when the reception of the instruction in the apparatus 61 is stopped, the electric current fed to the switch 71 is interrupted, and the switch 71 disconnects the contact points from each other. Then, the electric power supplied to the motor 72 is interrupted, so that the operation of the motor 72 is stopped. Therefore, the starting operation of the apparatus 61 is completed.

When the engine 100 misfires, the starting operation of the apparatus 61 is performed in the same manner, and the engine 100 is restarted.

In this embodiment, one groove 822 is placed every four grooves in the clutch 65, so that the number of springs 85 is equal to one-third of the number of rollers 83. However, one groove 822 may be placed every three grooves or every five or more grooves. In this case, the number of springs 85 is equal to or smaller than one-fourth of the number of rollers 83.

Further, the outer 82 may have the grooves 821 and 822 such that the number of grooves 822 is smaller than the number of grooves 821. That is, the number of springs 85 may be set to be smaller than the number of rollers 83. In this case, a spring force actually received in each roller 83 from the springs 85 is smaller than the biasing force of one spring 85. Therefore, the rollers 83 can be quickly moved toward the unlock side of the chambers 823, so that the separation rotational speed of the outer 82 can be lowered.

Effects in the device 63 and the clutch 65 will be described.

In this embodiment, one spring 85 substantially pushes three rollers 83 through the retainer 84. Therefore, as compared with the prior art wherein each spring pushes only one roller, the weight or mass of rollers 83 pushed substantially by one spring 85 can be increased without enlarging the size of the rollers. In other words, a spring force actually received in each roller 83 from the springs 85 is smaller than the biasing force of one spring 85. Accordingly, after the clutch 65 is set to the over-run state, the rollers 83 can be quickly moved to the unlock side of the chambers 823 to be unlocked from the outer 82, and the rollers 83 rotated with the inner 81 can be quickly centrifugally separated from the inner 81. As a result, the separation rotational speed of the outer 82 can be lowered, wear and/or abrasion caused in the clutch 65 during the over-run state can be reduced, and the torque transmitting device 63 can have a long life time.

Further, because the number of springs 85 disposed between the inner 81 and the outer 82 is smaller than that in the prior art, the space allowed for the rollers 83 can be increased in the clutch 65. Therefore, the freedom of design for the clutch 65 can be heightened. In addition, because the size of each roller 83 is the same as that in the prior art, the number of rollers disposed in the clutch 65 can be increased. Accordingly, the starting torque of the starter 62 can be increased, so that the engine 100 receiving this starting torque can reliably start the driving operation.

Moreover, in this embodiment, the retainer 84 has the biasing force receiving walls 843, protruding into the spring chambers 824 so as to receive the biasing forces of the respective springs 85, and the roller pushing walls 844 protruding into the respective cam chambers 823 so as to push the rollers 83 at the biasing forces of the springs 85 toward the rotational direction. Accordingly, the springs 85 can reliably push the retainer 84 through the walls 843 toward the rotational direction, and the retainer 84 can reliably push the rollers 83 through the walls 844 toward the rotational direction.

Further, in this embodiment, the clutch 65 is disposed in an idling stop system wherein the engine 100 of a vehicle mounting the clutch 65 is automatically stopped and restarted. In this case, each time the engine 100 is stopped and restarted, the clutch 65 is set to the over-run state. Therefore, wear and/or abrasion caused in the clutch 65 during the over-run state can be considerably reduced. For example, when the outer 82 is always connected with the engine 100 through the second rotating member 66, the clutch 65 disposed in the idling stop system is often set to the over-run state. However, because the separationrotational speed can be lowered in the clutch 65, wear and/or abrasion in the clutch 65 can be reduced. Further, even when the clutch 65 is disposed in an open space formed in the ring gear 64 such that the inner 81 is fixed to the gear 64, wear and/or abrasion in the clutch 65 can be reduced.

Furthermore, in this embodiment, the rollers 83 are in contact with the inner 81 through the grease or lubricating oil 46. Therefore, when the inner 81 is rotated, the grease 46 is sometimes floated over the inner 81 and is attached to the cam surfaces 821 of the outer 82. However, because the retainer 84 has the roller pushing walls 834, the walls 834 can strip off the grease 46 from the cam surfaces 821 while being rotated along the rotational direction. Therefore, the grease 46 can be retuned onto the outer circumferential surface of the inner 81. Accordingly, wear and/or abrasion caused in the rollers 83, the inner 81 and the outer 82 can be efficiently reduced.

These embodiments should not be construed as limiting the present invention to structures of those embodiments, and the structure of this invention may be combined with that based on the prior art.

## Claims

1. A torque transmitting device (1), comprising:
a first rotating member (3) that is rotatable with a pinion gear (7) of a starter (2);
a second rotating member (5) that is rotatable with a crank shaft (4) of an engine; and
a one-way clutch (6) disposed between the first (3) and second (5) rotating members,
wherein the clutch (6) comprises:
an inner (12) that is rotated with the first rotating member (3);
an outer (13) that is rotated with the second rotating member (5), the outer (13) being shaped to form a cam chamber (14) between the inner (12) and the outer (13) such that a width of the cam chamber (14) in a radial direction of the clutch (6) is narrowed toward a first side of the cam chamber (14) in a circumferential direction of the clutch (6);
a plurality of rollers (15), disposed in the cam chamber (14) along the circumferential direction to be movable in the circumferential direction, that connect in use the inner (12) and the outer (13) in response to a rotation of the inner (12) caused by a starting torque of the starter (2) to transmit the starting torque from the inner (12) to the outer (13) and disconnect the outer (13) from the inner (12) in response to a rotation of the outer (13) caused by an engine torque of the engine to interrupt torque transmission from the outer (13) to the inner (12);
an inertial member (22) that is moved with the rollers (15) in the same direction as a moving direction of the rollers (15); and
a spring (16) that indirectly presses the rollers (15) toward the first side of the cam chamber (14) through the inertial member (22),
**characterized in that** the inertial member (22) comprises:
an inertial body (21a) with a biasing force receiving part (21d) receiving a biasing force from the spring (16), the inertial body (21a) being formed in a cylindrical shape so as to successively extend along the circumferential direction;
a plurality of roller accommodating spaces (21b), in which the respective rollers (15) are accommodated;
a plurality of roller pushing parts (21c) transmitting the biasing force received in the biasing force receiving part (21d) to the respective rollers (15) accommodated in the roller accommodating spaces (21b); and
an attaching part (19) being attached to the inertial body (21a) and being in contact with the inner (12) such that the attaching part (19) slides on the inner (12) while generating a sliding resistance when the inertial member (22) is moved on the inner (12), the attaching part (19) being made of rubber.

2. The device (1) according to claim 1, wherein the attaching part (19) of the inertial member (22) is configured to seal a space between the inner (12) and the rollers (15).

3. The device (1) according to claim 1, wherein the inertial member (22) is disposed on the inner (12) in the cam chamber (14) to be directly in contact with the rollers (15).

4. The device (1) according to claim 1, wherein the attaching part (19) of the inertial member (22) is a pair of rubber rings attached to an inner circumferential surface of the inertial body (21 a) along the circumferential direction so as to be slidably placed on an outer circumferential surface of the inner (12), and the rubber rings are, respectively, disposed on outer sides of the rollers (15) in an axial direction of the clutch (6).

## Patentansprüche

1. Drehmomentübertragungsvorrichtung (1), aufweisend:
ein erstes Rotationselement (3), das mit einem Ritzel (7) eines Starters (2) rotierbar ist;
ein zweites Rotationselement (5), das mit einer Kurbelwelle (4) einer Maschine rotierbar ist; und
eine Einwegkupplung (6), die zwischen dem ersten (3) und dem zweiten (5) Rotationselement angeordnet ist,
wobei die Kupplung (6) aufweist:
ein Innenteil (12), das mit dem ersten Rotationselement (3) rotiert wird;
ein Außenteil (13), das mit dem zweiten Rotationselement (5) rotiert wird, wobei das Außenteil (13) so geformt ist, dass es eine Nockenkammer (14) zwischen dem Innenteil (12) und dem Außenteil (13) ausbildet, so dass eine Breite der Nockenkammer (14) in einer radialen Richtung der Kupplung (6) in Richtung auf eine erste Seite der Nockenkammer (14) in einer Umfangsrichtung der Kupplung (6) verengt wird;
eine Mehrzahl von Rollen (15), die in der Nockenkammer (14) entlang der Umfangsrichtung angeordnet sind, so dass sie in der Umfangsrichtung beweglich sind, die während der Verwendung das Innenteil (12) und das Außenteil (13) in Reaktion auf eine Rotation des Innenteils (12), die durch ein Startdrehmoment des Starters (2) bewirkt wird, miteinander verbinden, um das Startdrehmoment von dem Innenteil (12) auf das Außenteil (13) zu übertragen, und das Außenteil (13) von dem Innenteil (12) in Reaktion auf eine Rotation des Außenteils (13), die durch ein Maschinendrehmoment der Maschine bewirkt wird, zu trennen, um eine Drehmomentübertragung von dem Außenteil (13) auf das Innenteil (12) zu unterbrechen;
ein Trägheitselement (22), das mit den Rollen (15) in die gleiche Richtung wie eine Bewegungsrichtung der Rollen (15) bewegt wird; und
eine Feder (16), die die Rollen (15) durch das Trägheitselement (22) indirekt in Richtung der ersten Seite der Nockenkammer (14) drückt,
**dadurch gekennzeichnet, dass** das Trägheitselement (22) aufweist:
einen Trägheitskörper (21 a) mit einem Vorspannkraft-Aufnahmeteil (21 d), das eine Vorspannkraft von der Feder (16) aufnimmt, wobei der Trägheitskörper (21a) in einer zylindrischen Form ausgebildet ist, so dass er sich sukzessive entlang der Umfangsrichtung erstreckt;
eine Mehrzahl von Rollenunterbringungsräumen (21b), in denen die jeweiligen Rollen (15) untergebracht sind;
eine Mehrzahl von Rollenstoßteilen (21c), die die in dem Vorspannkraft-Aufnahmeteil (21d) aufgenommene Vorspannkraft auf die jeweiligen Rollen (15) überträgen, die in den Rollenunterbringungsräumen (21b) untergebracht sind; und
ein Anbringungsteil (19), das an dem Trägheitskörper (21a) angebracht ist und mit dem Innenteil (12) in Kontakt ist, so dass das Anbringungsteil (19) auf dem Innenteil (12) gleitet, während es einen Gleitwiderstand erzeugt wird, wenn das Trägheitselement (22) auf dem Innenteil (12) bewegt wird, wobei das Anbringungsteil (19) aus Gummi besteht.

2. Vorrichtung (1) nach Anspruch 1, wobei das Anbringungsteil (19) des Trägheitselements (22) so konfiguriert ist, dass es einen Raum zwischen dem Innenteil (12) und den Rollen (15) abdichtet.

3. Vorrichtung (1) nach Anspruch 1, wobei das Trägheitselement (22) auf dem Innenteil (12) in der Nockenkammer (14) angeordnet ist, so dass es mit den Rollen direkt in Kontakt steht.

4. Vorrichtung (1) nach Anspruch 1, wobei das Anbringungsteil (19) des Trägheitselements (22) ein Paar von Gummiringen ist, die an einer inneren Umfangsoberfläche des Trägheitskörpers (21a) entlang der Umfangsrichtung angebracht sind, so dass sie verschiebbar auf einer äußeren Umfangsoberfläche des Innenteils (12) angeordnet sind, und die Gummiringe jeweils auf äußeren Seiten der Rollen (15) in einer axialen Richtung der Kupplung (6) angeordnet sind.

## Revendications

1. Dispositif de transmission de couple (1), comprenant :
un premier élément rotatif (3) qui peut tourner avec un engrenage à pignons (7) d'un démarreur (2) ;
un deuxième élément rotatif (5) qui peut tourner avec un vilebrequin (4) d'un moteur ; et
un embrayage simple (6) disposé entre le premier (3) et le deuxième (5) éléments rotatifs,
dans lequel l'embrayage (6) comprend :
un élément intérieur (12) qui est tourné avec le premier élément rotatif (3) ;
un élément extérieur (13) qui est tourné avec le deuxième élément rotatif (5), l'élément extérieur (13) étant conformé pour constituer une chambre à came (14) entre l'élément intérieur (12) et l'élément extérieur (13) de sorte qu'une largeur de la chambre à came (14) dans une direction radiale de l'embrayage (6) soit rétrécie vers un premier côté de la chambre à came (14) dans une direction circonférentielle de l'embrayage (6) ;
une pluralité de rouleaux (15) disposés dans la chambre à came (14) le long de la direction circonférentielle pour être mobiles dans la direction circonférentielle, qui relient lors de utilisation l'élément intérieur (12) et l'élément extérieur (13) en réponse à une rotation de l'élément intérieur (12) causée par un couple de démarrage du démarreur (2) pour transmettre le couple de démarrage de l'élément intérieur (12) à l'élément extérieur (13) et pour déconnecter l'élément extérieur (13) de l'élément intérieur (12) en réponse à une rotation de l'élément extérieur (13) causée par un couple moteur pour interrompre la transmission du couple de l'élément extérieur (13) à l'élément intérieur (12) ;
un élément d'inertie (22) qui est déplacé avec les rouleaux (15) dans la même direction qu'une direction de déplacement des rouleaux (15) ; et
un ressort (16) qui presse indirectement les rouleaux (15) vers le premier côté de la chambre à came (14) par l'élément d'inertie (22),
**caractérisé en ce que** l'élément d'inertie (22) comprend :
un corps d'inertie (21a) avec une partie recevant la force de sollicitation (21d) recevant une force de sollicitation du ressort (16), le corps d'inertie (21a) étant réalisé dans une forme cylindrique de sorte à s'étendre successivement le long de la direction circonférentielle ;
une pluralité d'espaces logeant des rouleaux (21b), dans lesquels les rouleaux respectifs (15) sont logés ;
une pluralité de parties poussant les rouleaux (21c) transmettant la force de sollicitation reçue dans la partie recevant la force de sollicitation (21d) aux rouleaux respectifs (15) logés dans les espaces logeant les rouleaux (21b) ; et
une partie de fixation (19) étant fixée au corps d'inertie (21a) et étant en contact avec l'élément intérieur (12) de sorte que la partie de fixation (19) glisse sur l'élément intérieur (12) tout en générant une résistance au glissement lorsque l'élément d'inertie (22) est déplacé sur l'élément intérieur (12), la partie de fixation (19) étant faite en caoutchouc.

2. Dispositif (1) selon la revendication 1, dans lequel la partie de fixation (19) de l'élément d'inertie (22) est configurée pour fermer de manière étanche un espace entre l'élément intérieur (12) et les rouleaux (15).

3. Dispositif (1) selon la revendication 1, dans lequel l'élément d'inertie (22) est disposé sur l'élément intérieur (12) dans la chambre à came (14) pour être directement en contact avec les rouleaux (15).

4. Dispositif (1) selon la revendication 1, dans lequel la partie de fixation (19) de l'élément d'inertie (22) est une paire d'anneaux en caoutchouc fixés sur une surface circonférentielle intérieure du corps d'inertie (21a) le long de la direction circonférentielle de sorte à être placés coulissant sur une surface circonférentielle externe de l'élément intérieur (12), et les anneaux en caoutchouc sont respectivement disposés sur des côtés externes des rouleaux (15) dans une direction axiale de l'embrayage (6).
